# EUROPEAN PATENT APPLICATION

(11) **EP 3 103 855 A1**
(43) Date of publication of application: **14.12.2016**
(21) Application number: 15001728.3
(22) Date of filing: 11.06.2015
(51) Int. Cl.: C09K 19/20, C09K 19/12, C09K 19/30

(54) **LIQUID-CRYSTALLINE MEDIUM**

(71) Applicant: Merck Patent GmbH, 64293 Darmstadt (DE)
(72) Inventor: Shu, Martin Kelun, TAICHUNG CITY (TW)

(57) **Abstract**

The invention relates to a liquid-crystalline medium which comprises at least one compound of the formula I, 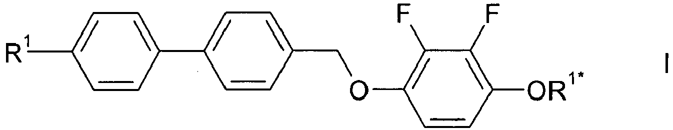 in which
R¹, and R^{1*} have the meanings indicated in Claim 1,
and to the use thereof for an active-matrix display, in particular based on the VA, PSA, PS-VA, PALC, FFS, PS-FFS, IPS or PS-IPS effect.

## Description

The invention relates to a liquid-crystalline medium which comprises at least one compound of the formula I, 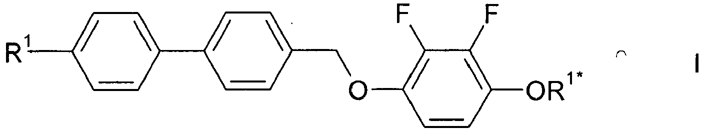 in which
- R¹ and R^{1*}: each, independently of one another, denote an alkyl or alkoxy radical having 1 to 15 C atoms, or cycloalkyl having 3 to 5 C atoms, where, in addition, one or more CH₂ groups in these radicals may each be replaced, independently of one another, by -C≡C-, -CF₂O-, -CH=CH-, 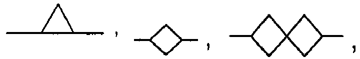 -O-, -CO-O-, -O-CO- in such a way that O atoms are not linked directly to one another, and in which, in addition, one or more H atoms may be replaced by halogen.

Media of this type can be used, in particular, for electro-optical displays having active-matrix addressing based on the ECB effect and for IPS (in-plane switching) displays or FFS (fringe field switching) displays. In particular, the liquid-crystal mixtures according to the invention are suitable for use in LC displays of the PS (polymer stabilised) or PSA (polymer sustained alignment) type.

The principle of electrically controlled birefringence, the ECB effect or also DAP (deformation of aligned phases) effect, was described for the first time in 1971 (M.F. Schieckel and K. Fahrenschon, "Deformation of nematic liquid crystals with vertical orientation in electrical fields", Appl. Phys. Lett. 19 (1971), 3912). This was followed by papers by J.F. Kahn (Appl. Phys. Lett. 20 (1972), 1193) and G. Labrunie and J. Robert (J. Appl. Phys. 44 (1973), 4869).

The papers by J. Robert and F. Clerc (SID 80 Digest Techn. Papers (1980), 30), J. Duchene (Displays 7 (1986), 3) and H. Schad (SID 82 Digest Techn. Papers (1982), 244) showed that liquid-crystalline phases must have high values for the ratio of the elastic constants K₃/K₁, high values for the optical anisotropy Δn and values for the dielectric anisotropy of Δε ≤ -0.5 in order to be suitable for use in high-information display elements based on the ECB effect. Electro-optical display elements based on the ECB effect have a homeotropic edge alignment (VA technology = vertically aligned). Dielectrically negative liquid-crystal media can also be used in displays which use the so-called IPS or FFS effect.

Displays which use the ECB effect, as so-called VAN (vertically aligned nematic) displays, for example in the MVA (multi-domain vertical alignment, for example: Yoshide, H. et al., paper 3.1: "MVA LCD for Notebook or Mobile PCs ...", SID 2004 International Symposium, Digest of Technical Papers, XXXV, Book I, pp. 6 to 9, and Liu, C.T. et al., paper 15.1: "A 46-inch TFT-LCD HDTV Technology ...", SID 2004 International Symposium, Digest of Technical Papers, XXXV, Book II, pp. 750 to 753), PVA (patterned vertical alignment, for example: Kim, Sang Soo, paper 15.4: "Super PVA Sets New State-of-the-Art for LCD-TV", SID 2004 International Symposium, Digest of Technical Papers, XXXV, Book II, pp. 760 to 763), ASV (advanced super view, for example: Shigeta, Mitzuhiro and Fukuoka, Hirofumi, paper 15.2: "Development of High Quality LCDTV", SID 2004 International Symposium, Digest of Technical Papers, XXXV, Book II, pp. 754 to 757) modes, have established themselves as one of the three more recent types of liquid-crystal display that are currently the most important, in particular for television applications, besides IPS (inplane switching) displays (for example: Yeo, S.D., paper 15.3: "An LC Display for the TV Application", SID 2004 International Symposium, Digest of Technical Papers, XXXV, Book II, pp. 758 & 759) and the long-known TN (twisted nematic) displays. The technologies are compared in general form, for example, in Souk, Jun, SID Seminar 2004, seminar M-6: "Recent Advances in LCD Technology", Seminar Lecture Notes, M-6/1 to M-6/26, and Miller, Ian, SID Seminar 2004, seminar M-7: "LCD-Television", Seminar Lecture Notes, M-7/1 to M-7/32. Although the response times of modern ECB displays have already been significantly improved by addressing methods with overdrive, for example: Kim, Hyeon Kyeong et al., paper 9.1: "A 57-in. Wide UXGA TFT-LCD for HDTV Application", SID 2004 International Symposium, Digest of Technical Papers, XXXV, Book I, pp. 106 to 109, the achievement of video-compatible response times, in particular on switching of grey shades, is still a problem which has not yet been satisfactorily solved.

Industrial application of this effect in electro-optical display elements requires LC phases, which have to satisfy a multiplicity of requirements. Particularly important here are chemical resistance to moisture, air and physical influences, such as heat, infrared, visible and ultraviolet radiation and direct and alternating electric fields.

Furthermore, industrially usable LC phases are required to have a liquid-crystalline mesophase in a suitable temperature range and low viscosity.

None of the hitherto-disclosed series of compounds having a liquid-crystalline mesophase includes a single compound which meets all these requirements. Mixtures of two to 25, preferably three to 18, compounds are therefore generally prepared in order to obtain substances which can be used as LC phases. However, it has not been possible to prepare optimum phases easily in this way since no liquid-crystal materials having significantly negative dielectric anisotropy and adequate long-term stability were hitherto available.

Matrix liquid-crystal displays (MLC displays) are known. Non-linear elements which can be used for individual switching of the individual pixels are, for example, active elements (i.e. transistors). The term "active matrix" is then used, where a distinction can be made between two types:
1. MOS (metal oxide semiconductor) transistors on a silicon wafer as substrate
2. thin-film transistors (TFTs) on a glass plate as substrate.

In the case of type 1, the electro-optical effect used is usually dynamic scattering or the guest-host effect. The use of single-crystal silicon as substrate material restricts the display size, since even modular assembly of various part-displays results in problems at the joints.

In the case of the more promising type 2, which is preferred, the electro-optical effect used is usually the TN effect.

A distinction is made between two technologies: TFTs comprising compound semiconductors, such as, for example, CdSe, or TFTs based on polycrystalline or amorphous silicon. The latter technology is being worked on intensively worldwide.

The TFT matrix is applied to the inside of one glass plate of the display, while the other glass plate carries the transparent counterelectrode on its inside. Compared with the size of the pixel electrode, the TFT is very small and has virtually no adverse effect on the image. This technology can also be extended to fully colour-capable displays, in which a mosaic of red, green and blue filters is arranged in such a way that a filter element is opposite each switchable pixel.

The term MLC displays here covers any matrix display with integrated non-linear elements, i.e. besides the active matrix, also displays with passive elements, such as varistors or diodes (MIM = metal-insulator-metal).

MLC displays of this type are particularly suitable for TV applications (for example pocket TVs) or for high-information displays in automobile or aircraft construction. Besides problems regarding the angle dependence of the contrast and the response times, difficulties also arise in MLC displays due to insufficiently high specific resistance of the liquid-crystal mixtures [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, pp. 141 ff., Paris; STROMER, M., Proc. Eurodisplay 84, Sept. 1984: Design of Thin Film Transistors for Matrix Addressing of Television Liquid Crystal Displays, pp. 145 ff., Paris]. With decreasing resistance, the contrast of an MLC display deteriorates. Since the specific resistance of the liquid-crystal mixture generally drops over the life of an MLC display owing to interaction with the inside surfaces of the display, a high (initial) resistance is very important for displays that have to have acceptable resistance values over a long operating period.

VA displays have significantly better viewing-angle dependencies and are therefore principally used for televisions and monitors. However, there continues to be a need here to improve the response times, in particular with respect to the use of televisions having frame rates (image change frequency/repetition rates) of greater than 60 Hz. At the same time, however, the properties, such as, for example, the low-temperature stability, must not be impaired.

The liquid-crystal displays (LC displays) used at present are usually those of the TN (twisted nematic) type. However, these have the disadvantage of a strong viewing-angle dependence of the contrast. In addition, so-called VA (vertical alignment) displays are known which have a broader viewing angle. The LC cell of a VA display contains a layer of a liquid-crystalline medium between two transparent electrodes, where the liquid-crystalline medium usually has a negative value of the dielectric (DC) anisotropy. In the switched-off state, the molecules of the LC layer are aligned perpendicular to the electrode surfaces (homeotropically) or have a tilted homeotropic alignment. On application of an electrical voltage to the electrodes, a realignment of the LC molecules parallel to the electrode surfaces takes place. Furthermore, OCB (optically compensated bend) displays are known which are based on a birefringence effect and have an LC layer with a so-called "bend" alignment and usually positive (DC) anisotropy. On application of an electrical voltage, a realignment of the LC molecules perpendicular to the electrode surfaces takes place. In addition, OCB displays normally contain one or more birefringent optical retardation films in order to prevent undesired transparency to light of the bend cell in the dark state. OCB displays have a broader viewing angle and shorter response times compared with TN displays. Also known are IPS (in-plane switching) displays, which contain an LC layer between two substrates, only one of which has an electrode layer, usually with a comb-shaped structure. On application of a voltage, an electric field which has a significant component parallel to the LC layer is thereby generated. This causes a realignment of the LC molecules in the layer plane. Furthermore, so-called FFS (fringe-field switching) displays have been proposed (see, inter alia, S.H. Jung et al., Jpn. J. Appl. Phys., Volume 43, No. 3, 2004, 1028), which likewise contain two electrodes on the same substrate, but, in contrast to IPS displays, only one of these is in the form of a structured (comb-shaped) electrode, and the other electrode is unstructured. A strong, so-called "fringe field" is thereby generated, i.e. a strong electric field close to the edge of the electrodes, and, throughout the cell, an electric field which has both a strong vertical component and also a strong horizontal component. Both IPS displays and also FFS displays have a low viewing-angle dependence of the contrast.

In VA displays of the more recent type, uniform alignment of the LC molecules is restricted to a plurality of relatively small domains within the LC cell. Disclinations may exist between these domains, also known as tilt domains. VA displays having tilt domains have, compared with conventional VA displays, a greater viewing-angle independence of the contrast and the grey shades. In addition, displays of this type are simpler to produce since additional treatment of the electrode surface for uniform alignment of the molecules in the switched-on state, such as, for example, by rubbing, is no longer necessary. Instead, the preferential direction of the tilt or pretilt angle is controlled by a special design of the electrodes. In so-called MVA (multidomain vertical alignment) displays, this is usually achieved by the electrodes having protrusions which cause a local pretilt. As a consequence, the LC molecules are aligned parallel to the electrode surfaces in different directions in different, defined regions of the cell on application of a voltage. "Controlled" switching is thereby achieved, and the formation of interfering disclination lines is prevented. Although this arrangement improves the viewing angle of the display, it results, however, in a reduction in its transparency to light. A further development of MVA uses protrusions on only one electrode side, while the opposite electrode has slits, which improves the transparency to light. The slitted electrodes generate an inhomogeneous electric field in the LC cell on application of a voltage, meaning that controlled switching is still achieved. For further improvement of the transparency to light, the separations between the slits and protrusions can be increased, but this in turn results in a lengthening of the response times. In the so-called PVA (patterned VA), protrusions are rendered completely superfluous in that both electrodes are structured by means of slits on the opposite sides, which results in increased contrast and improved transparency to light, but is technologically difficult and makes the display more sensitive to mechanical influences (tapping, etc.). For many applications, such as, for example, monitors and especially TV screens, however, a shortening of the response times and an improvement in the contrast and luminance (transmission) of the display are demanded.

A further development are the so-called PS (polymer-stabilised) displays, which are also known under the term "PSA" (polymer-sustained alignment). In these, a small amount (for example 0.3%, typically < 1%) of a polymerisable compound is added to the liquid-crystalline medium and, after introduction into the LC cell, is polymerised or crosslinked in situ, usually by UV photopolymerisation, with or without an applied electrical voltage between the electrodes. The addition of polymerisable mesogenic or liquid-crystalline compounds, also known as "reactive mesogens" (RMs), to the LC mixture has proven particularly suitable. In the meantime, the PSA principle is being used in diverse classical LC displays. Thus, for example, PSA-VA, PSA-OCB, PS-IPS, PS-FFS and PS-TN displays are known. The in-situ polymerisation of the polymerisable compound(s) is usually carried out, for example in the case of PSA-VA displays, with an applied electrical voltage with or without an applied electrical voltage in the case of PSA-IPS displays. As can be demonstrated in test cells, the PSA method results in a pretilt in the cell. In the case of PSA-OCB displays, it is therefore possible for the bend structure to be stabilised so that an offset voltage is unnecessary or can be reduced. In the case of PSA-VA displays, this pretilt has a positive effect on response times. For PSA-VA displays, a standard MVA or PVA pixel and electrode layout can be used. In addition, however, it is possible, for example, to manage with only one structured electrode side and no protrusions, which significantly simplifies production and at the same time results in very good contrast at the same time as very good transparency to light. PSA-VA displays are described, for example, in JP 10-036847 A, EP 1 170 626 A2, EP 1 378 557 A1, EP 1 498 468 A1, US 2004/0191428 A1, US 2006/0066793 A1 and US 2006/0103804 A1. PSA-OCB displays are described, for example, in T.-J- Chen et al., Jpn. J. Appl. Phys. 45, 2006, 2702-2704 and S. H. Kim, L.-C- Chien, Jpn. J. Appl. Phys. 43, 2004, 7643-7647. PS-IPS displays are described, for example, in US 6,177,972 and Appl. Phys. Lett. 1999, 75(21), 3264. PS-TN displays are described, for example, in Optics Express 2004, 12(7), 1221.

In particular for monitor applications and especially for TV applications, optimisation of the response times, but also of the contrast and luminance (thus also transmission) of the LC display continues to be demanded. The PSA method can provide crucial advantages here. In particular in the case of PSA-VA, a shortening of the response times, which correlates with a measurable pretilt in test cells, can be achieved without significant adverse effects on other parameters.

However, it has been found that the LC mixtures known from the prior art still have some disadvantages on use in VA and PSA displays. Thus, not every desired soluble RM by far is suitable for use in PSA displays, and it is often difficult to find more suitable selection criteria than the direct PSA experiment with pretilt measurement. The choice becomes even smaller if polymerisation by means of UV light without the addition of photoinitiators is desired, which may be advantageous for certain applications. In addition, the liquid-crystal mixture or the liquid-crystal mixture (also referred to as "LC host mixture" below) + polymerisable component "material system" selected should have the lowest possible rotational viscosity and the best possible electrical properties, with the emphasis here being on the so-called "voltage holding ratio" (VHR or HR). In connection with PSA displays, a high VHR after irradiation with UV light is, in particular, of central importance since UV exposure is a necessary part of the display production process, but naturally also occurs as "normal" exposure in the finished display.

In addition, the problem arises that not all LC mixture + polymerisable component combinations by far are suitable for PSA displays since, for example, no tilt or an inadequate tilt arises or since, for example, the VHR is inadequate for TFT display applications.

In particular, it would be desirable to have available novel materials for PSA displays which generate a particularly low pretilt angle. Materials which generate a lower pretilt angle during polymerisation for the same exposure time than the materials known to date, and/or through the use of which the (higher) pretilt angle that can be achieved using the known materials can already be achieved after a shorter exposure time would be particularly desirable. The production time (tact time) of the display could thus be shortened and the costs of the production process reduced.

There is thus still a great demand for liquid-crystal mixtures for MLC displays having very high specific resistance at the same time as a large working-temperature range, short response times and a low threshold voltage, with the aid of which various grey shades can be generated. Furthermore, it should be possible to employ the liquid-crystalline mixtures both in VA, IPS and FFS, PALC and also in PS-VA, PSA, PS-IPS, PS-FFS displays, as well as in other modifications of the mentioned modes (such as SA-VA, SA-UB-FFS or -IPS, SA-HB-FFS or -IPS, SA-FFS or -IPS, PS-UB-FFS or -IPS and PS-HB-FFS or -IPS, and they should not exhibit the disadvantages described above, or should only do so to a small extent, and should at the same time have improved properties. In PS-VA and PSA displays, the liquid-crystalline media comprising a polymerisable component should be capable of establishing an adequate pre-tilt in the MLC displays and should have a relatively high voltage holding ratio (VHR or HR).

The invention is based on the object of providing liquid-crystalline media which can be employed, in particular, both in IPS, FFS, VA and also in PS-VA displays and are suitable, in particular, for monitor and TV applications, which do not have the disadvantages indicated above, or only do so to a reduced extent. In particular, it must be ensured for monitors and televisions that they also work at extremely high and extremely low temperatures and at the same time have short response times and at the same time have an improved reliability behaviour, in particular exhibit no or significantly reduced image sticking after long operating times.

Surprisingly, it is possible to improve the rotational viscosity values and thus the response times if polar compounds of the general formula I are used in liquid-crystal mixtures, in particular in LC mixtures having negative dielectric anisotropy, preferably for VA displays. Furthermore, it has been found, surprisingly, that the use of liquid-crystalline media according to the invention in PS-VA and PSA displays facilitates particularly low pre-tilt angles and rapid establishment of the desired tilt angles. This has been demonstrated in the case of the media according to the invention by means of pre-tilt measurements. In particular, it has been possible to achieve a pre-tilt without the addition of photoinitiator. In addition, the media according to the invention exhibit significantly faster generation of the pre-tilt angle compared with the materials known from the prior art, as has been demonstrated by exposure time-dependent measurements of the pre-tilt angle.

The invention thus relates to a liquid-crystalline medium which comprises at least one compound of the formula I.

The compounds of the formula I in liquid-crystalline media simultaneously have very low rotational viscosity values and high absolute values of the dielectric anisotropy. It is therefore possible to prepare liquid-crystal mixtures, preferably VA and PS-VA mixtures, which have short response times, at the same time good phase properties and good low-temperature behaviour.

The invention furthermore relates to a liquid-crystalline medium comprising an LC mixture according to the invention as described above and below, and one or more polymerisable compounds, preferably selected from the group consisting of reactive mesogens.

The invention furthermore relates to a liquid-crystalline medium comprising an LC mixture according to the invention as described above and below, and a polymer obtainable by polymerisation of one or more polymerisable compounds, which are preferably selected from the group consisting of reactive mesogens.

The invention furthermore relates to an LC medium comprising
- a polymerisable component A) comprising one or more polymerisable compounds, preferably selected from reactive mesogens, and
- a liquid-crystalline component B), also referred to as "LC host mixture" below, consisting of an LC mixture according to the invention comprising one or more compounds of the formula I as described above and below.

The invention furthermore relates to an LC medium comprising
- a polymer obtainable by polymerisation of a polymerisable component A) comprising one or more polymerisable compounds, preferably selected from reactive mesogens, and
- a liquid-crystalline component B), also referred to as "LC host mixture" below, consisting of an LC mixture according to the invention comprising one or more compounds of the formula I as described above and below.

The invention furthermore relates to the use of LC mixtures according to the invention in PS and PSA displays, in particular the use in PS and PSA displays containing a liquid-crystalline medium, for generating a tilt angle in the liquid-crystalline medium by in-situ polymerisation of the polymerisable compound(s) in the PSA display, preferably with application of an electric and/or magnetic field, preferably an electric field.

The invention furthermore relates to an LC display containing an LC medium according to the invention, in particular a PS or PSA display, particularly preferably a PSA-VA, PS-IPS or PS-FFS display.

The invention furthermore relates to an LC display of the PS or PSA type containing an LC cell consisting of two substrates and two electrodes, where at least one substrate is transparent to light and at least one substrate has an electrode, and a layer, located between the substrates, of an LC medium comprising a polymerised component and a low-molecular-weight component, where the polymerised component is obtainable by polymerisation of one or more polymerisable compounds in the LC medium between the substrates of the LC cell, preferably with application of an electrical voltage to the electrodes, where the low-molecular-weight component is an LC mixture according to the invention as described above and below.

The invention furthermore relates to a process for the preparation of a liquid-crystal mixture according to the invention in which at least one compound of the formula I is mixed with further mesogenic compounds and optionally with one or more polymerisable compounds and/or one or more additives and/or stabilisers.

The invention furthermore relates to a process for the production of an LC display in which an LC mixture according to the invention is mixed with one or more polymerisable compounds and optionally with further liquid-crystalline compounds and/or additives and/or stabilisers, the mixture obtained in this way is introduced into an LC cell having two substrates and two electrodes, as described above and below, and the polymerisable compound(s) is (are) polymerised at the electrodes, preferably with application of an electrical voltage. The mixtures according to the invention preferably exhibit very broad nematic phase ranges with clearing points ≥ 70°C, preferably ≥ 75°C, in particular ≥ 80°C, very favourable values of the capacitive threshold, relatively high values of the holding ratio and at the same time very good low-temperature stabilities at -20°C and -30°C, as well as very low rotational viscosity values and short response times. The mixtures according to the invention are furthermore distinguished by the fact that, in addition to the improvement in the rotational viscosity γ₁, relatively high values of the elastic constants K₃₃ for improving the response times can be observed. Some preferred embodiments of the mixtures according to the invention are indicated below.

In the compounds of the formula I, R¹ preferably denotes straight-chain alkyl, in particular C₂H₅, n-C₃H₇, n-C₄H₉, n-C₅H₁₁, n-C₆H₁₃, furthermore alkenyl or alkoxy, such as, for example, CH₂=CH, CH₃CH=CH, CH₃CH₂CH=CH, C₃H₇CH=CH, OC₂H₅, OC₃H₇, OC₄H₉, OC₅H₁₁, OC₆H₁₃, and alkenyloxy, such as, for example, OCH₂CH=CH₂, OCH₂CH=CHCH₃, OCH₂CH=CHC₂H₅. R¹ very particularly preferably denotes C₂H₅, n-C₃H₇, n-C₄H₉, n-C₅H₁₁.

In the compounds of the formula I, R^{1*} preferably denotes straight-chain alkyl, in particular C₂H₅, C₃H₇, C₄H₉, C₅H₁₁, C₆H₁₃, and furthermore alkenyl such as, for example, CH₂CH=CH₂, CH₂CH=CHCH₃, CH₂CH=CHC₂H₅. R^{1*} very particularly preferably denotes C₂H₅, C₃H₇, C₄H₉ or C₅H₁₁.

Preferred compounds of the formula I are the compounds of the formulae I-1 to I-3, 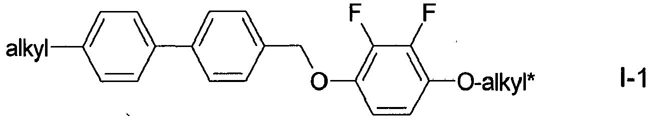 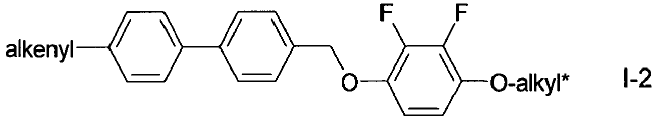 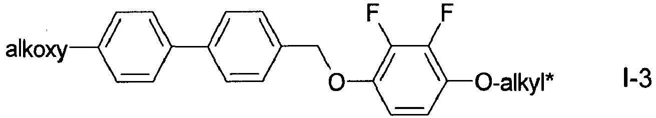 in which
alkyl and alkyl* each, independently of one another, denote a straight-chain alkyl radical having 1-6 C atoms, alkoxy denotes a straight-chain alkoxy radical having 1-6 C atoms, and alkenyl denotes a straight-chain alkenyl radical having 2-6 C atoms.

Of the sub-formulae I-1 to I-3 indicated, particular preference is given to the compounds of the formulae I-1.

The mixtures according to the invention very particularly preferably comprise at least one compound from the following group:

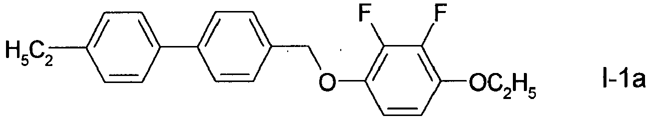

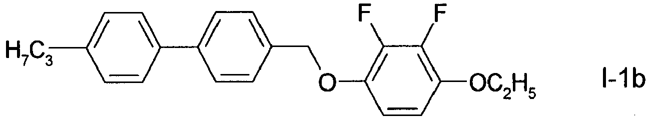

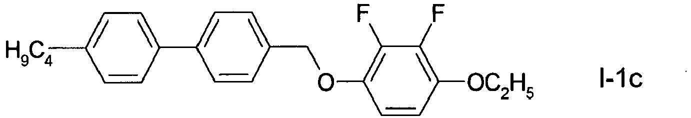

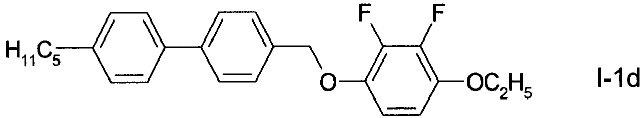

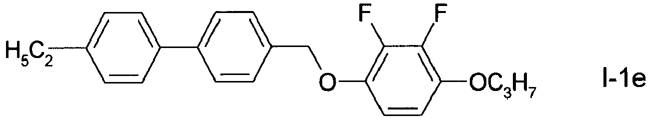

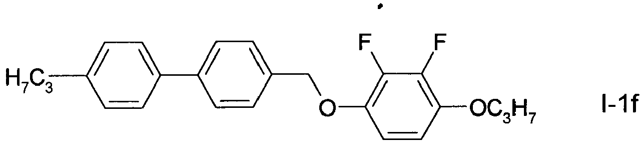

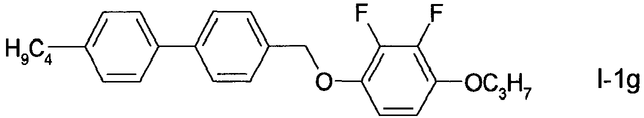

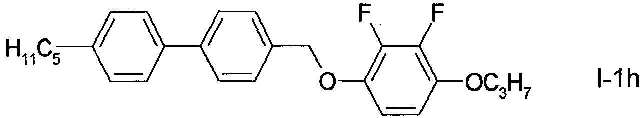

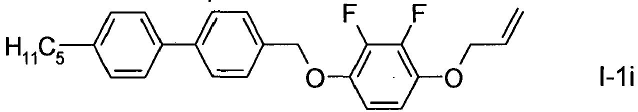

Of the preferred compounds of the formulae I-1a to I-1h, very particular preference is given, in particular, to the compounds of the formulae I-1b and I-1i.

The compounds of the formula I and the sub-formulae thereof are preferably employed in amounts of 1-15% by weight, preferably 2-10% by weight, per homologue and based on the mixture. If a plurality of compounds of the formula I are employed in the mixtures according to the invention, the total concentration of all compounds of the formula I is 1-30% by weight, preferably 2-20% by weight, based on the mixture.

The compounds of the formula I are known and disclosed e.g. in WO 2015/034018 A1, and can be prepared according to procedures described in the literature.

The media according to the invention preferably comprise one, two, three or more, preferably one or two, particularly preferably one compound of the formula I.

The compounds of the formula I are preferably employed in the liquid-crystalline medium in amounts of ≥ 1% by weight, preferably ≥ 3% by weight, based on the mixture as a whole. Particular preference is given to liquid-crystalline media which comprise 2 - 10% by weight of one or more compounds of the formula I.

Preferred embodiments of the liquid-crystalline medium according to the invention are indicated below:
a) Liquid-crystalline medium which additionally comprises one or more compounds selected from the group of the compounds of the formulae IIA, IIB and IIC, 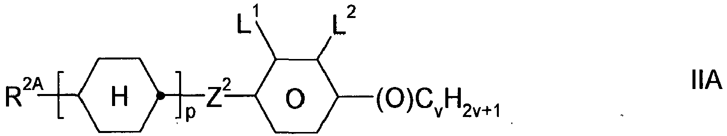 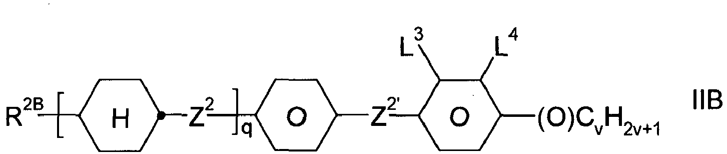 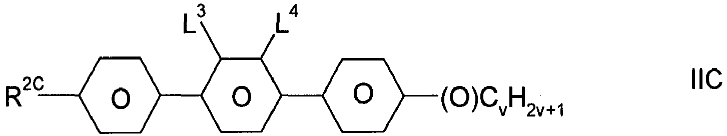 in which
   - R^{2A}, R^{2B} and R^{2C}: each, independently of one another, denote H, an alkyl radical having up to 15 C atoms which is unsubstituted, monosubstituted by CN or CF₃ or at least monosubstituted by halogen, where, in addition, one or more CH₂ groups in these radicals may be replaced by -O-, -S-, 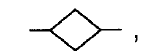 -C≡C-, -CF₂O-, -OCF₂-, -OC-O- or -O-CO- in such a way that O atoms are not linked directly to one another,
   - L¹⁻⁴: each, independently of one another, denote F, Cl, CF₃ or CHF₂,
   - Z² and Z^{2'}: each, independently of one another, denote a single bond, -CH₂CH₂-, -CH=CH-, -CF₂O-, -OCF₂-, -COO-, -OC(O)-, -C₂F₄-, -CF=CF-, -CH=CHCH₂O-,
   - p: denotes 1 or 2,
   - q: denotes 0 or 1, and
   - v: denotes 1 to 6.
   In the compounds of the formulae IIA and IIB, Z² may have identical or different meanings. In the compounds of the formula IIB, Z² and Z^{2'} may have identical or different meanings.
   In the compounds of the formulae IIA, IIB and IIC, R^{2A}, R^{2B} and R^{2C} each preferably denote alkyl having 1-6 C atoms, in particular CH₃, C₂H₅, n-C₃H₇, n-C₄H₉, n-C₅H₁₁.
   In the compounds of the formulae IIA and IIB, L¹, L², L³ and L⁴ preferably denote L¹ = L² = F and L³ = L⁴ = F, furthermore L¹ = F and L² = Cl, L¹ = Cl and L² = F, L³ = F and L⁴ = Cl, L³ = Cl and L⁴ = F. Z² and Z^{2'} in the formulae IIA and IIB preferably each, independently of one another, denote a single bond, furthermore a -C₂H₄- bridge.
   If in the formula IIB Z² = -C₂H₄-, Z^{2'} is preferably a single bond or, if Z^{2'} = -C₂H₄-, Z² is preferably a single bond. In the compounds of the formulae IIA and IIB, (O)CᵥH₂ᵥ₊₁ preferably denotes OCᵥH₂ᵥ₊₁, furthermore C_{V}H₂ᵥ₊₁. In the compounds of the formula IIC, (O)CᵥH₂ᵥ₊₁ preferably denotes CᵥH₂ᵥ₊₁. In the compounds of the formula IIC, L³ and L⁴ preferably each denote F.
   Preferred compounds of the formulae IIA, IIB and IIC are indicated below: 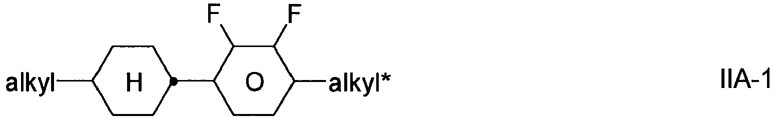 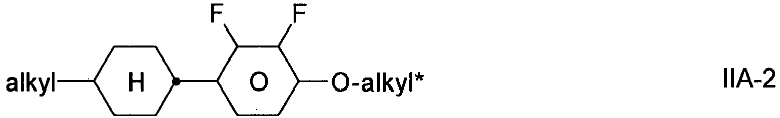 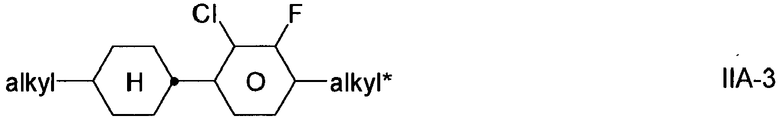 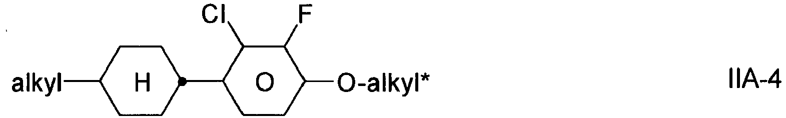 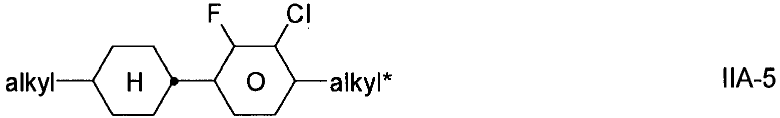 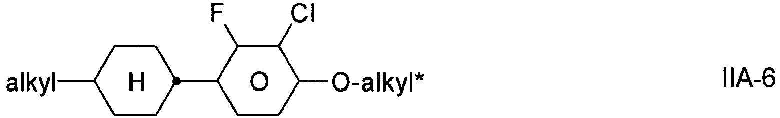 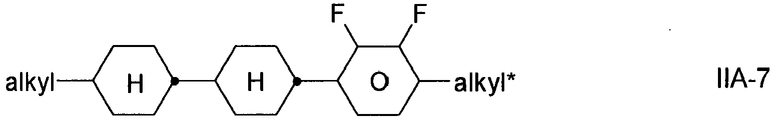 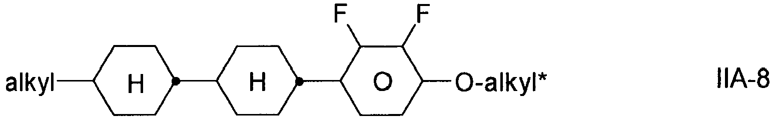 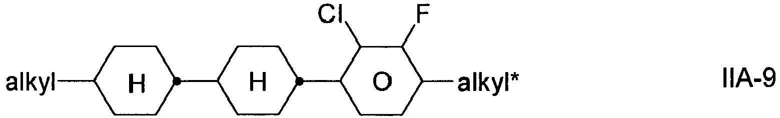 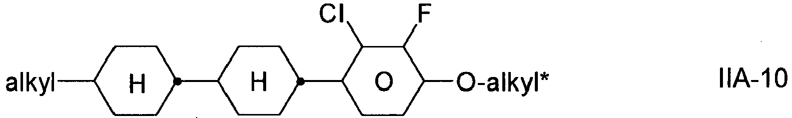 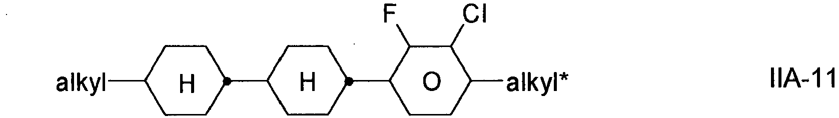 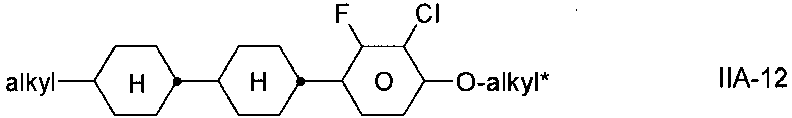 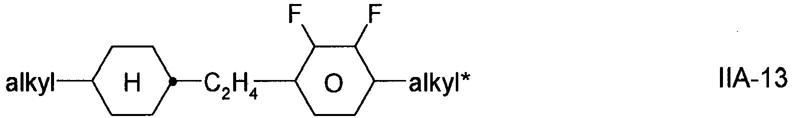 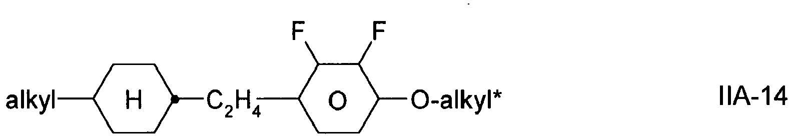 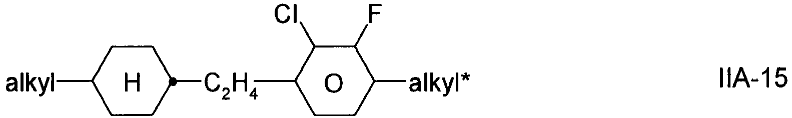 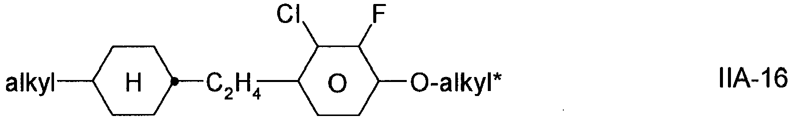 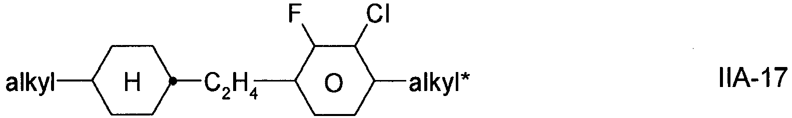 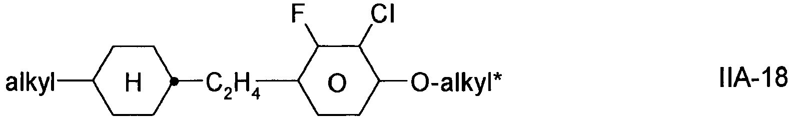 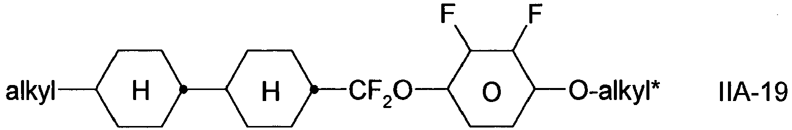 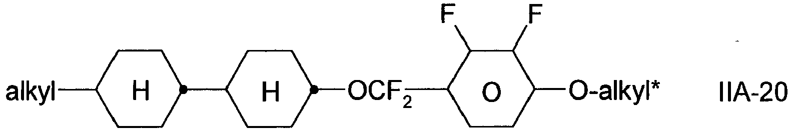 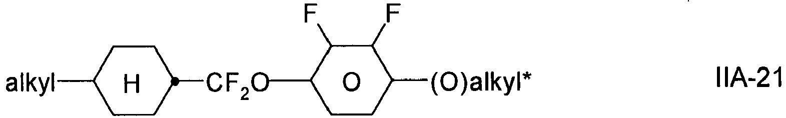 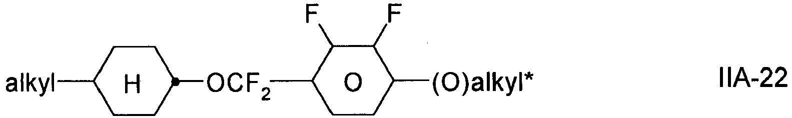 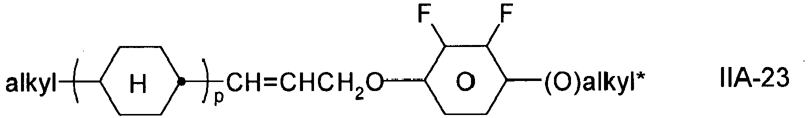 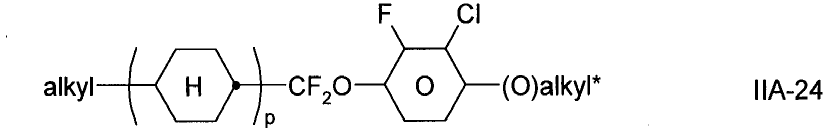 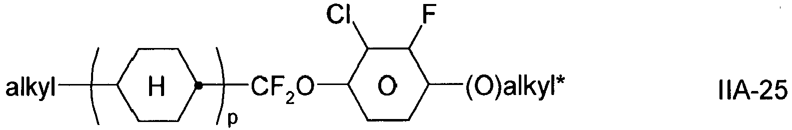 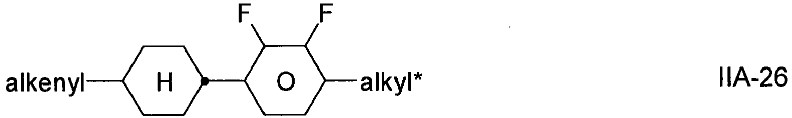 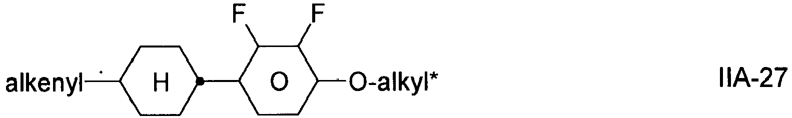 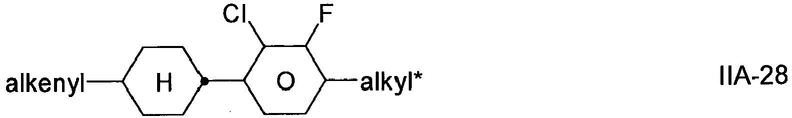 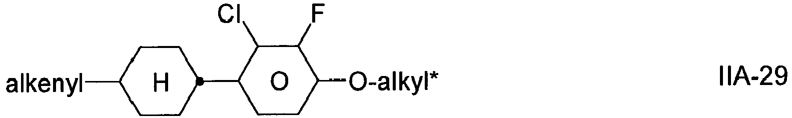 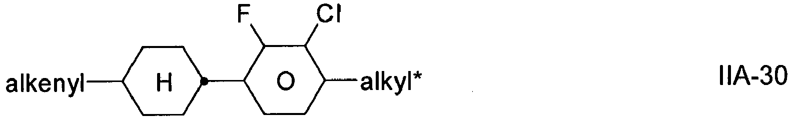 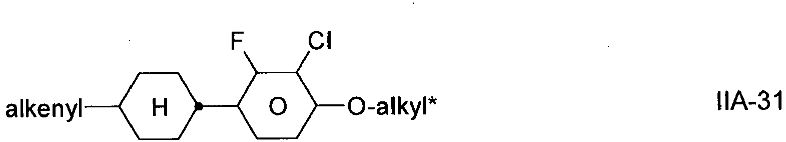 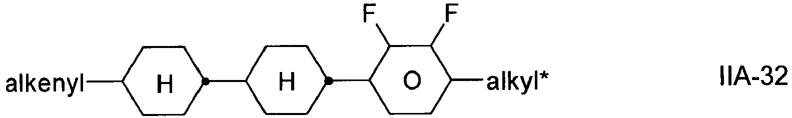 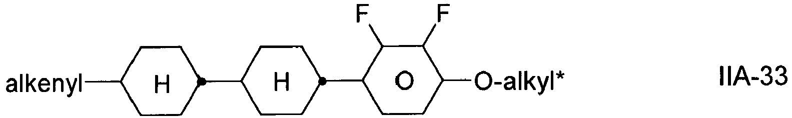 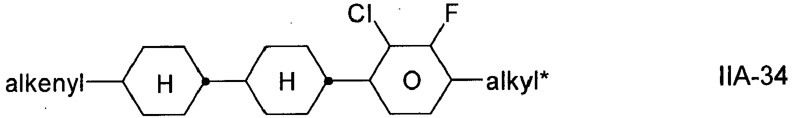 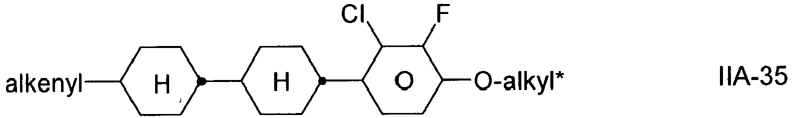 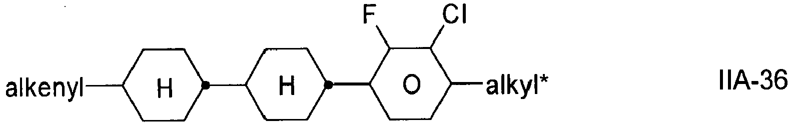 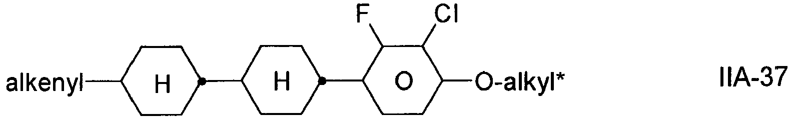 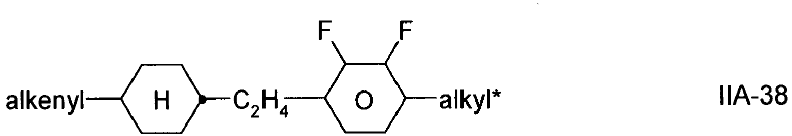 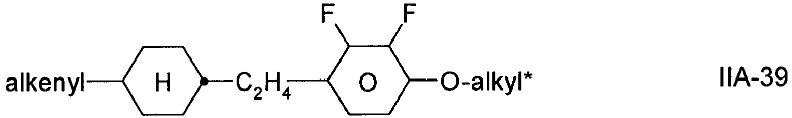 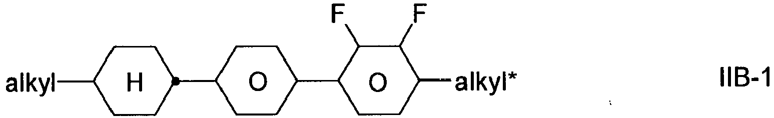 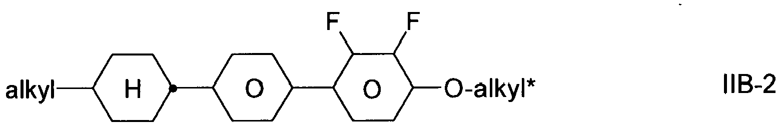 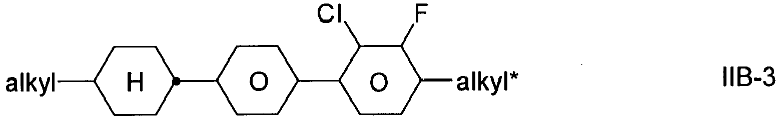 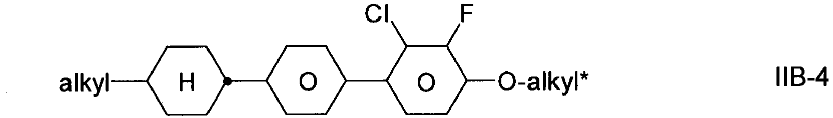 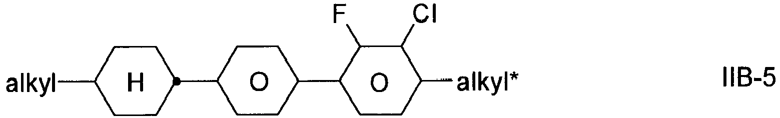 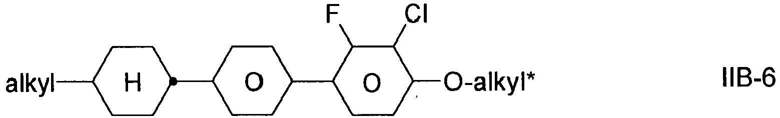 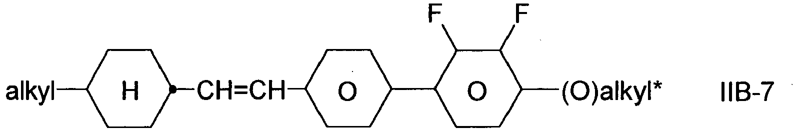 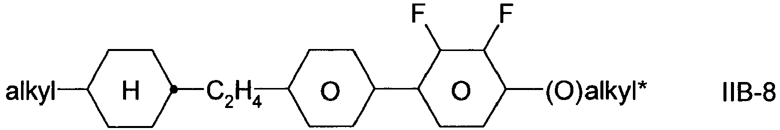 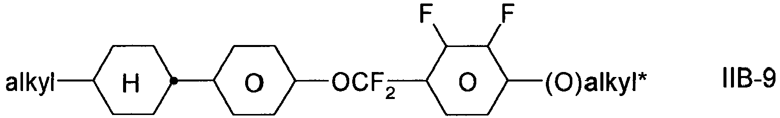 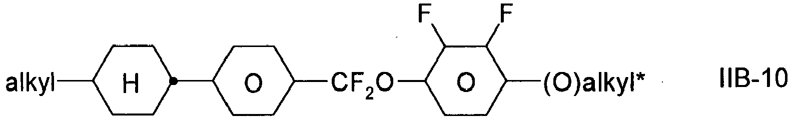 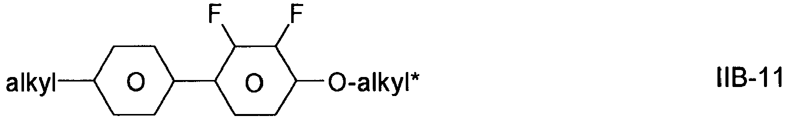 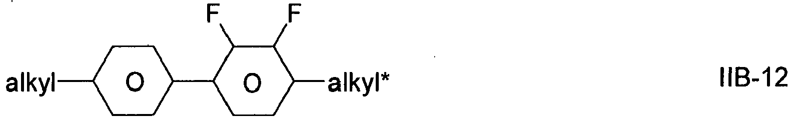 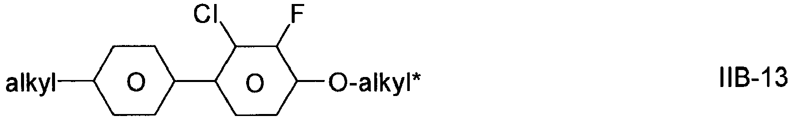 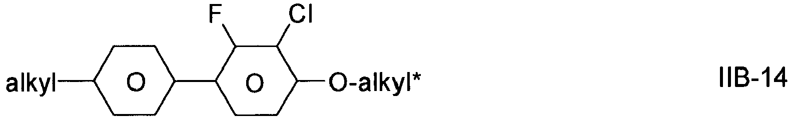 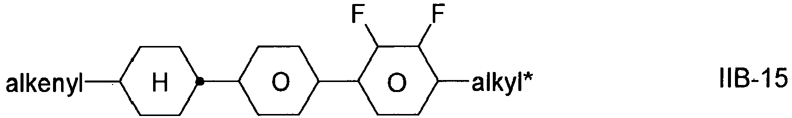 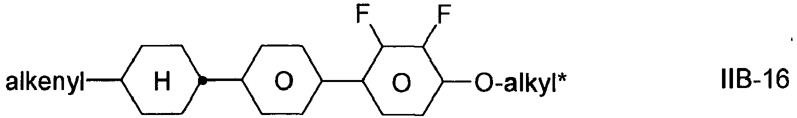 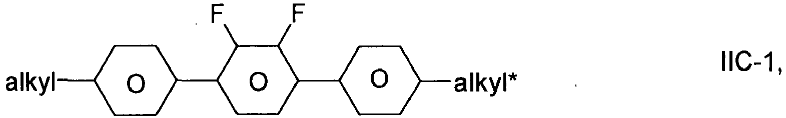 in which alkyl and alkyl* each, independently of one another, denote a straight-chain alkyl radical having 1-6 C atoms.
   Particularly preferred mixtures according to the invention comprise one or more compounds of the formulae IIA-2, IIA-8, IIA-14, IIA-27, IIA-33, IIB-2, IIB-11 and IIB-16.
   The proportion of compounds of the formulae IIA and/or IIB in the mixture as a whole is preferably at least 20% by weight.
   Particularly preferred media according to the invention comprise at least one compound of the formula IIC-1, 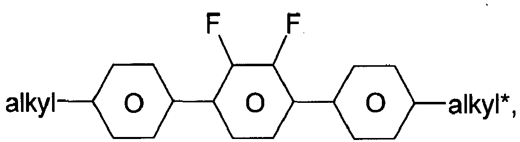 in which alkyl and alkyl* have the meanings indicated above, preferably in amounts of > 3% by weight, in particular > 5% by weight and particularly preferably 5-25% by weight.
b) Liquid-crystalline medium which additionally comprises one or more compounds of the formula III, 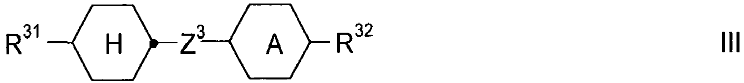 in which
   - R³¹ and R³²: each, independently of one another, denote a straight-chain alkyl, alkoxyalkyl or alkoxy radical having up to 12 C atoms, and 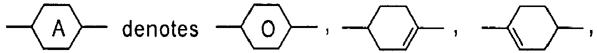 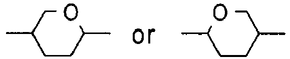
   - Z³: denotes a single bond, -CH₂CH₂-, -CH=CH-, -CF₂O-, -OCF₂-, -CH₂O-, -OCH₂-, -COO-, -OCO-, -C₂F₄-, -C₄H₈-, -CF=CF-.
   Preferred compounds of the formula III are indicated below: 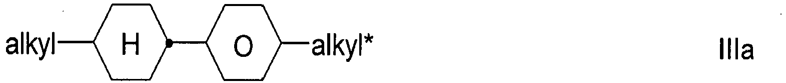 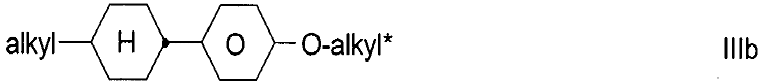 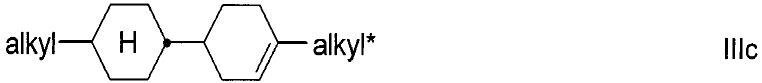 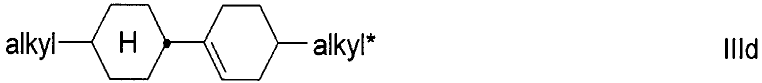 in which
   - alkyl and alkyl*: each, independently of one another, denote a straight-chain alkyl radical having 1-6 C atoms.
   The medium according to the invention preferably comprises at least one compound of the formula IIIa and/or formula IIIb.
   The proportion of compounds of the formula III in the mixture as a whole is preferably at least 5% by weight.
c) Liquid-crystalline medium additionally comprising a compound of the formula 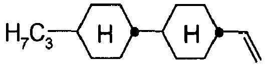 and / or 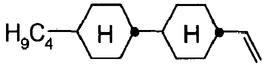 and / or 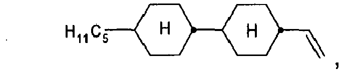 preferably in total amounts of ≥ 5% by weight, in particular ≥ 10% by weight.
   Preference is furthermore given to mixtures according to the invention comprising the compound 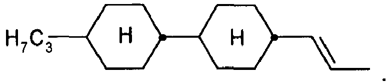
d) Liquid-crystalline medium which additionally comprises one or more tetracyclic compounds of the formulae 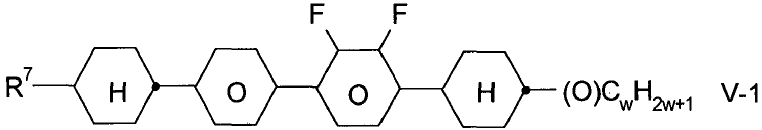 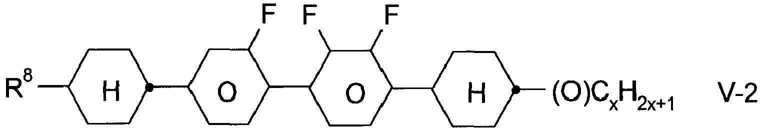 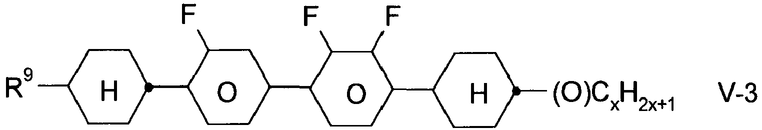 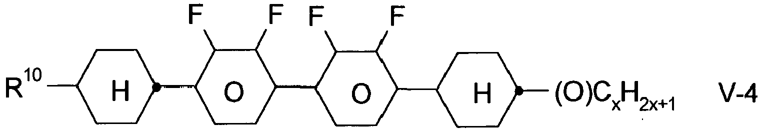 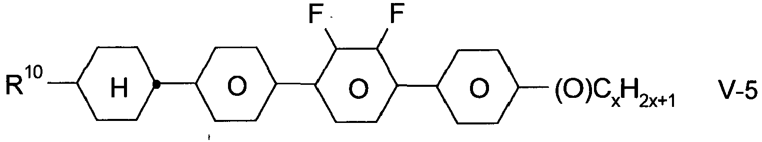 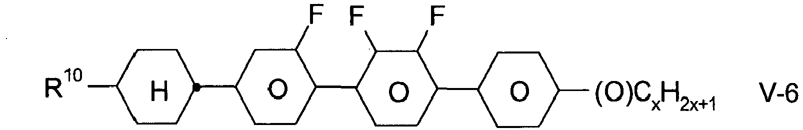 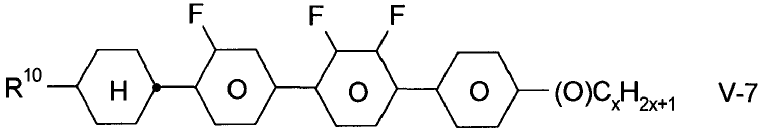 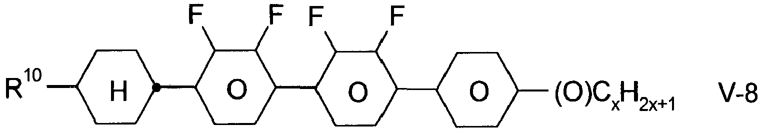 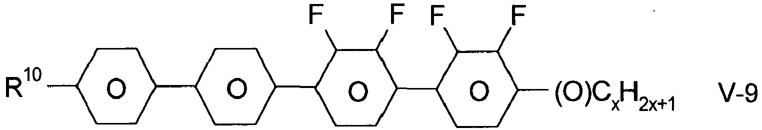 in which
   - R⁷⁻¹⁰: each, independently of one another, have one of the meanings indicated for R^{2A} in Claim 2, and
   - w and x: each, independently of one another, denote 1 to 6.
   Particular preference is given to mixtures comprising at least one compound of the formula V-9.
e) Liquid-crystalline medium which additionally comprises one or more compounds of the formulae Y-1 to Y-6, 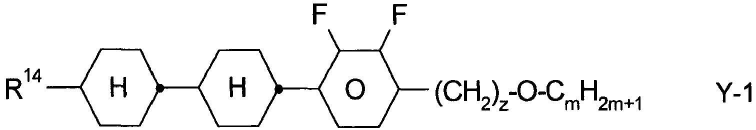 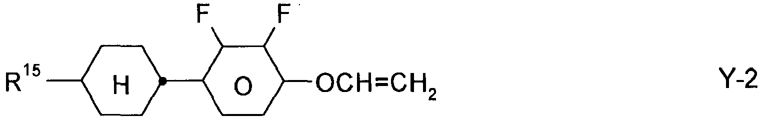 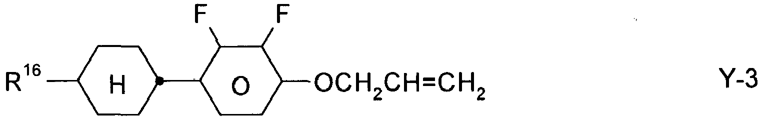 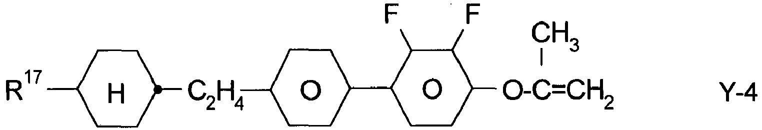 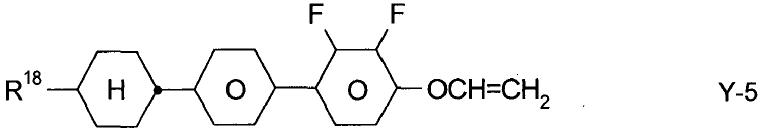 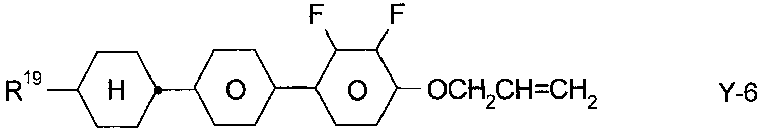 in which R¹⁴-R¹⁹ each, independently of one another, denote an alkyl or alkoxy radical having 1-6 C atoms; z and m each, independently of one another, denote 1-6; x denotes 0, 1, 2 or 3.
   The medium according to the invention particularly preferably comprises one or more compounds of the formulae Y-1 to Y-6, preferably in amounts of ≥ 5% by weight.
f) Liquid-crystalline medium additionally comprising one or more fluorinated terphenyls of the formulae T-1 to T-21, 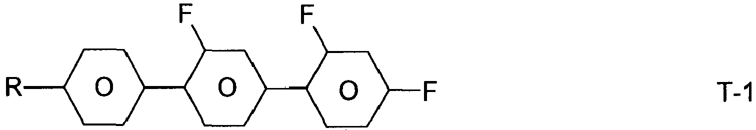 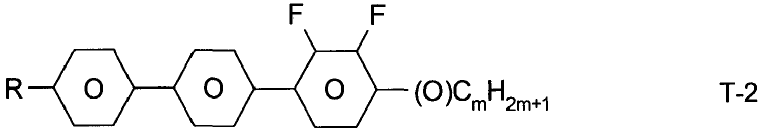 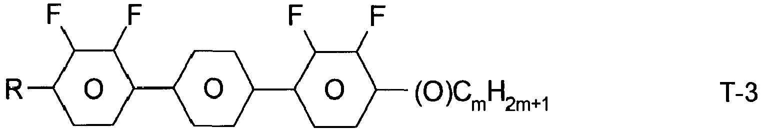 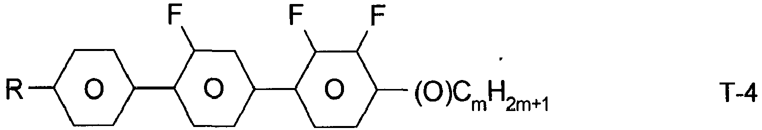 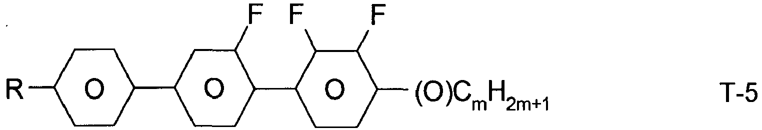 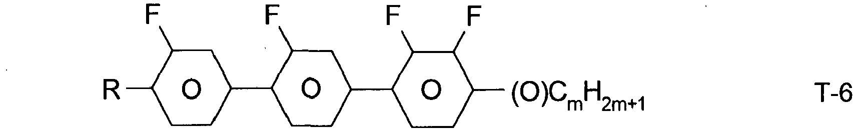 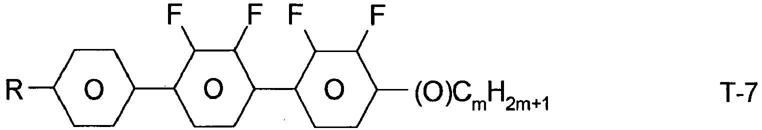 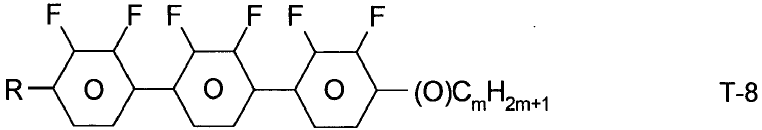 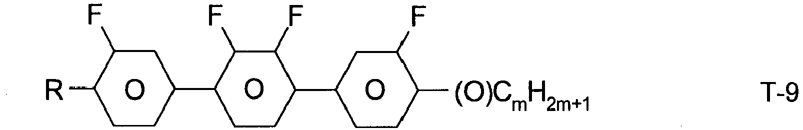 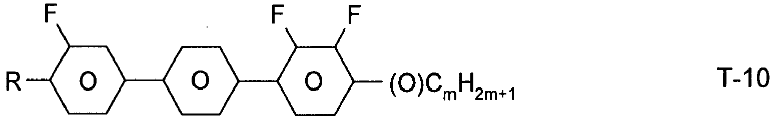 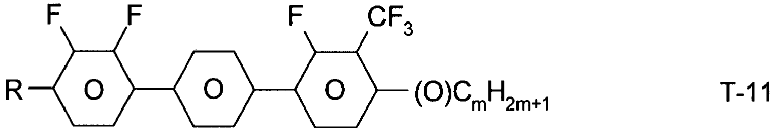 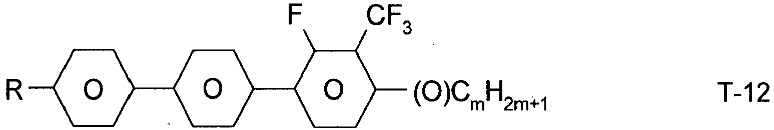 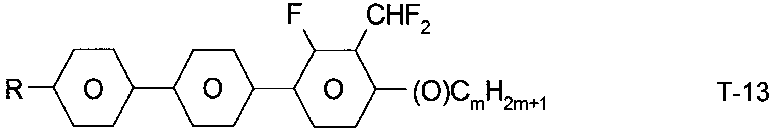 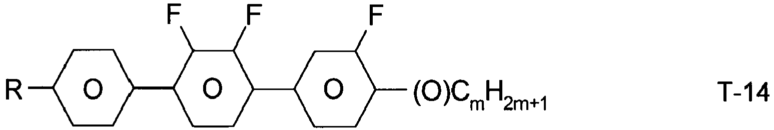 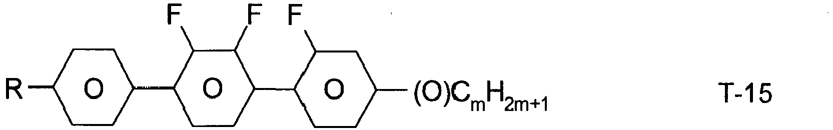 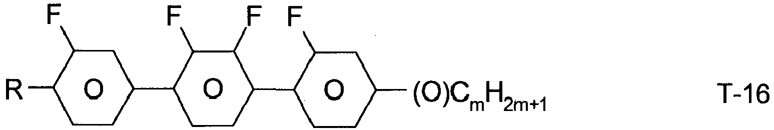 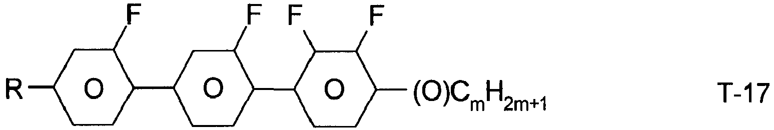 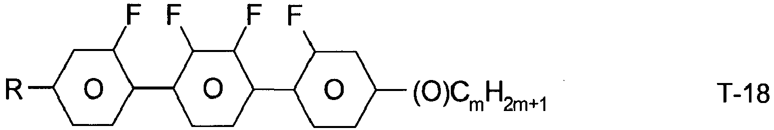 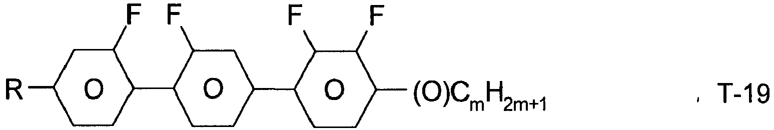 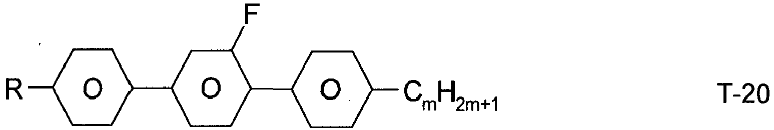 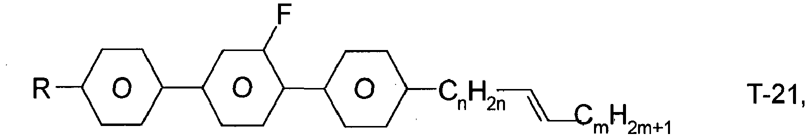 in which
   R denotes a straight-chain alkyl or alkoxy radical having 1-7 C atoms, and m = 0, 1, 2, 3, 4, 5 or 6 and n denotes 0, 1, 2, 3 or 4.
   R preferably denotes methyl, ethyl, propyl, butyl, pentyl, hexyl, methoxy, ethoxy, propoxy, butoxy, pentoxy.
   The medium according to the invention preferably comprises the terphenyls of the formulae T-1 to T-21 in amounts of 2-30% by weight, in particular 5-20% by weight.
   Particular preference is given to compounds of the formulae T-1, T-2, T-20 and T-21. In these compounds, R preferably denotes alkyl, furthermore alkoxy, each having 1-5 C atoms. In the compounds of the formula T-20, R preferably denotes alkyl or alkenyl, in particular alkyl. In the compound of the formula T-21, R preferably denotes alkyl.
   The terphenyls are preferably employed in the mixtures according to the invention if the Δn value of the mixture is to be ≥ 0.1. Preferred mixtures comprise 2-20% by weight of one or more terphenyl compounds selected from the group of the compounds T-1 to T-21.
g) Liquid-crystalline medium additionally comprising one or more biphenyls of the formulae B-1 to B-4, 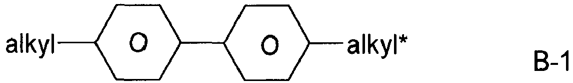 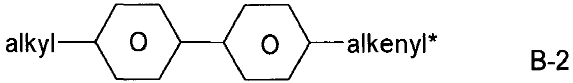 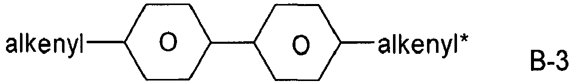 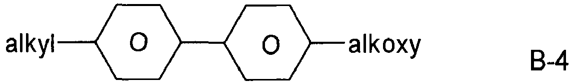 in which
   - alkyl and alkyl*: each, independently of one another, denote a straight-chain alkyl radical having 1-6 C atoms, and
   - alkoxy: denotes a straight-chain alkoxy radical having 1-6 C atoms,
   - alkenyl and alkenyl*: each, independently of one another, denote a straight-chain alkenyl radical having 2-6 C atoms.
   The proportion of the biphenyls of the formulae B-1 to B-4 in the mixture as a whole is preferably at least 3% by weight, in particular ≥ 5% by weight.
   Of the compounds of the formulae B-1 to B-4, the compounds of the formula B-2 are particularly preferred.
   Particularly preferred biphenyls are 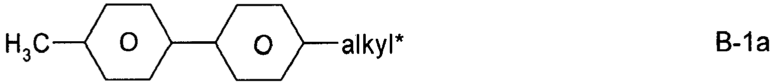 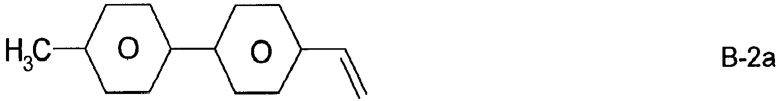 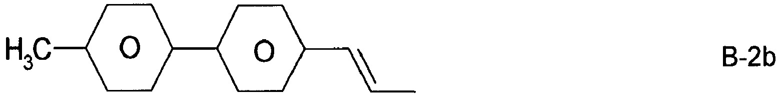 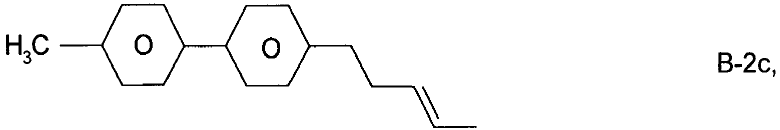 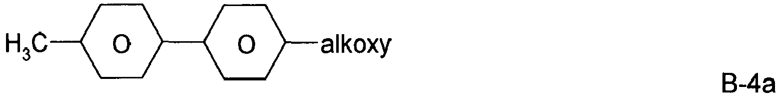 in which alkyl* denotes an alkyl radical having 1-6 C atoms. The medium according to the invention particularly preferably comprises one or more compounds of the formulae B-1a and/or B-2c.
h) Liquid-crystalline medium comprising at least one compound of the formulae Z-1 to Z-7, 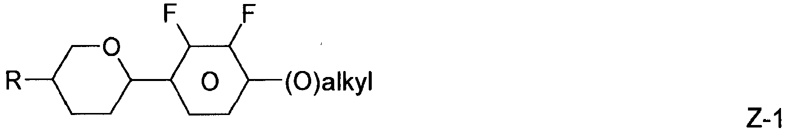 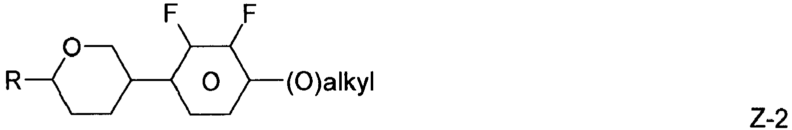 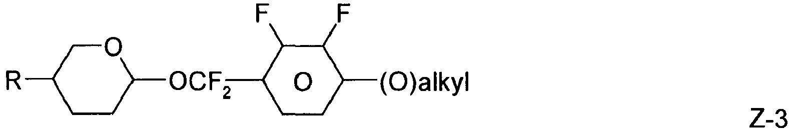 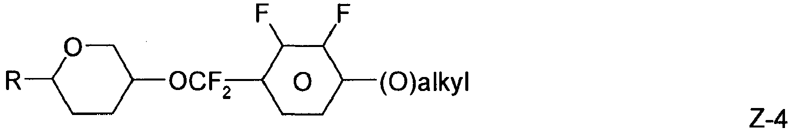 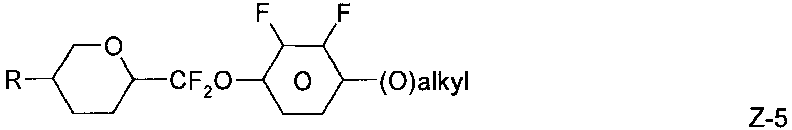 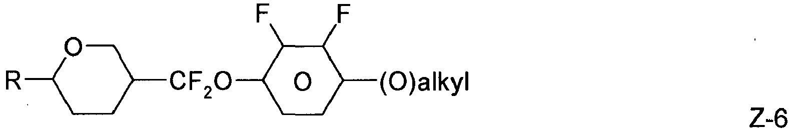 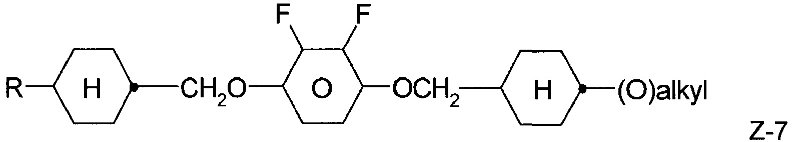 in which R and alkyl have the meanings indicated above.
i) Liquid-crystalline medium comprising at least one compound of the formulae O-1 to O-16, 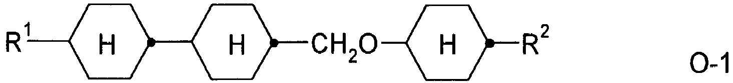 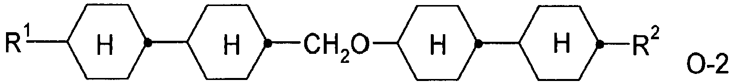 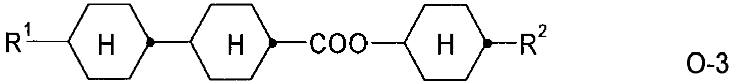 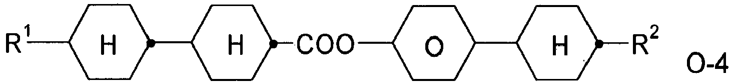 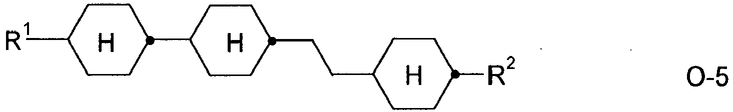 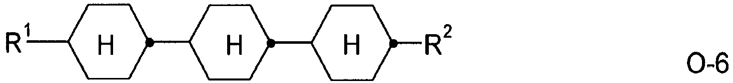 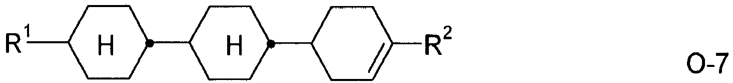 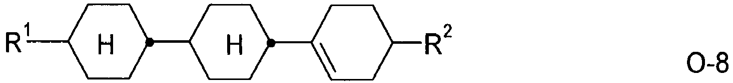 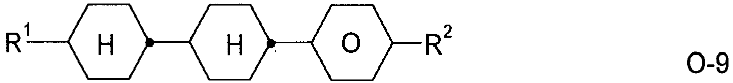 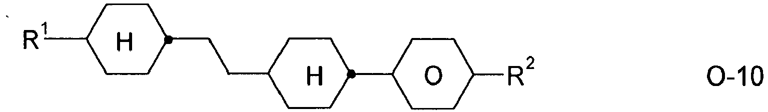 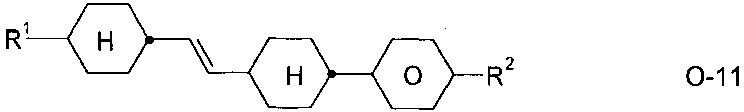 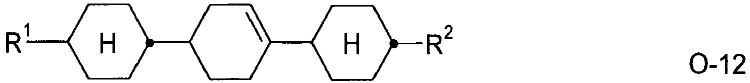 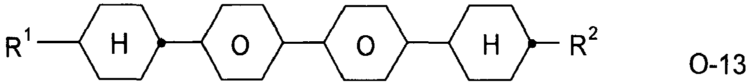 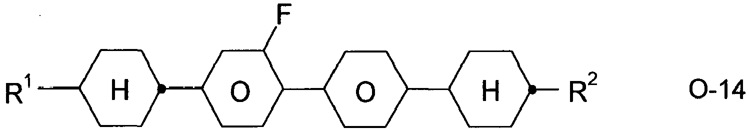 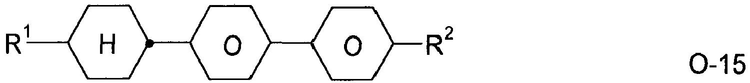 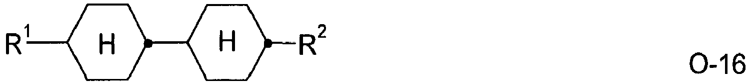 in which R¹ and R² have the meanings indicated for R^{2A}. R¹ and R² preferably each, independently of one another, denote straight-chain alkyl.
   Preferred media comprise one or more compounds of the formulae O-1, O-3, O-4, O-5, O-9, O-13, O-14, O-15 and/or O-16.
   Mixtures according to the invention very particularly preferably comprise the compounds of the formula O-9, O-15 and/or O-16, in particular in amounts of 5-30%.
   Preferred compounds of the formulae O-15 and O-16 are indicated below: 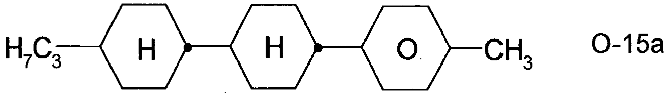 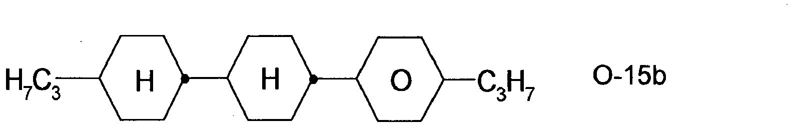 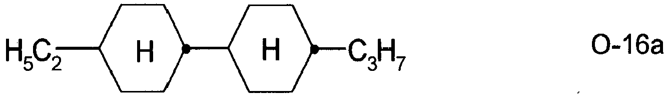 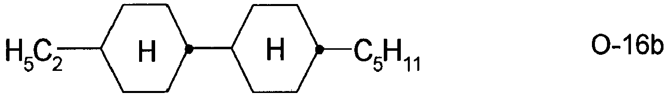 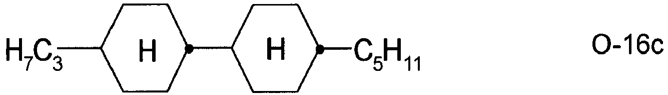 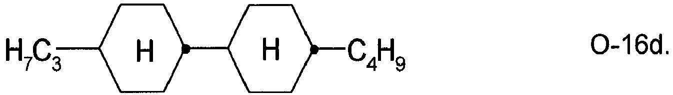 The medium according to the invention particularly preferably comprises the tricyclic compounds of the formula O-15a and/or of the formula O-15b in combination with one or more bicyclic compounds of the formulae O-16a to O-16d. The total proportion of the compounds of the formulae O-15a and/or O-15b in combination with one or more compounds selected from the bicyclic compounds of the formulae O-16a to O-16d is 5-40%, very particularly preferably in amounts of 15-35%, based on the mixture.
   Very particularly preferred mixtures comprise compounds O-15a and O-16a: 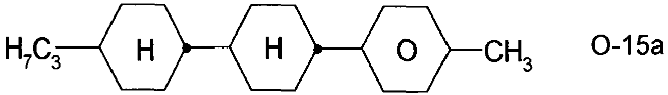 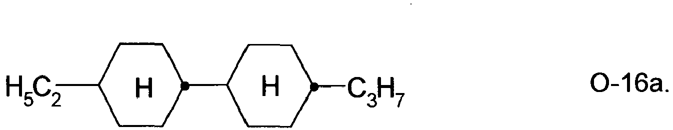 Compounds O-15a and O-16a are preferably present in the mixture in a concentration of 15-35%, particularly preferably 15-25% and especially preferably 18-22%, based on the mixture as a whole.
   Very particularly preferred mixtures comprise compounds O-15b and O-16a: 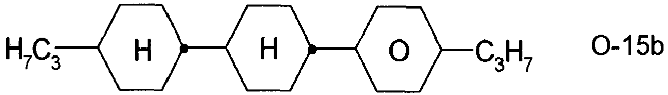 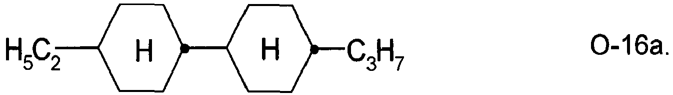 Compounds O-15b and O-16a are preferably present in the mixture in a concentration of 15-35%, particularly preferably 15-25% and especially preferably 18-22%, based on the mixture as a whole.
   Very particularly preferred mixtures comprise the following three compounds: 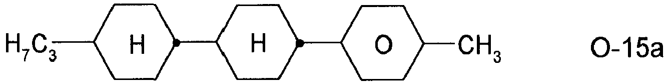 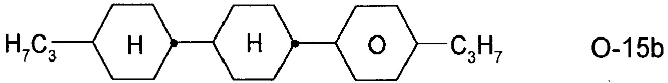 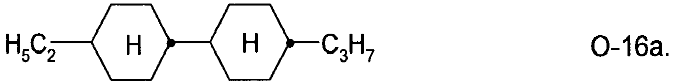 Compounds O-15a, O-15b and O-16a are preferably present in the mixture in a concentration of 15-35%, particularly preferably 15-25% and especially preferably 18-22%, based on the mixture as a whole.
j) Preferred liquid-crystalline media according to the invention comprise one or more substances which contain a tetrahydronaphthyl or naphthyl unit, such as, for example, the compounds of the formulae N-1 to N-5, 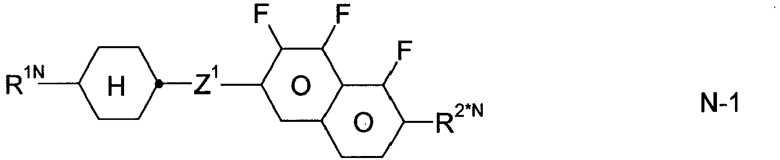 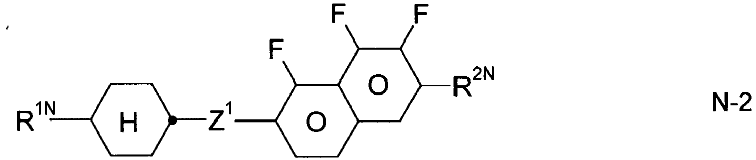 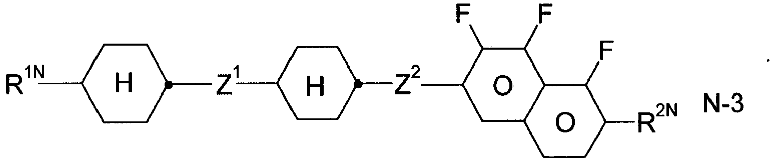 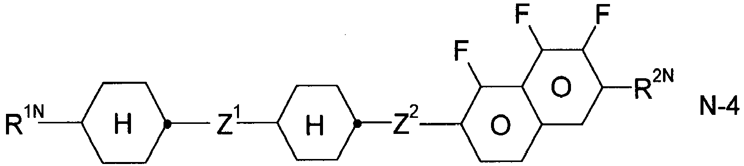 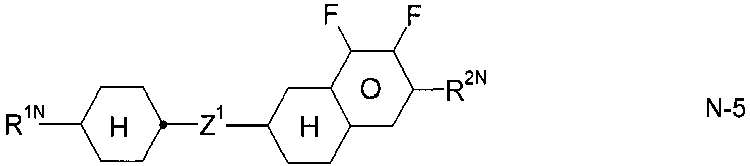 in which R^{1N} and R^{2N} each, independently of one another, have the meanings indicated for R^{2A}, preferably denote straight-chain alkyl, straight-chain alkoxy or straight-chain alkenyl, and
   - Z¹ and Z²: each, independently of one another, denote -C₂H₄-, -CH=CH-, -(CH₂)₄-, -(CH₂)₃O-, -O(CH₂)₃-, -CH=CHCH₂CH₂-, -CH₂CH₂CH=CH-, -CH₂O-, -OCH₂-, -C 00-, -OCO-, -C₂F₄-, -CF=CF-, -CF=CH-, -CH=CF-, -CF₂O-, -OCF₂-, -CH₂- or a single bond.
k) Preferred mixtures comprise one or more compounds selected from the group of the difluorodibenzochroman compounds of the formula BC, chromans of the formula CR, fluorinated phenanthrenes of the formulae PH-1 and PH-2, fluorinated dibenzofurans of the formula BF, 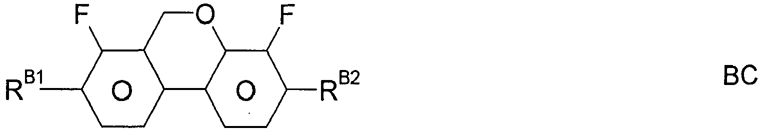 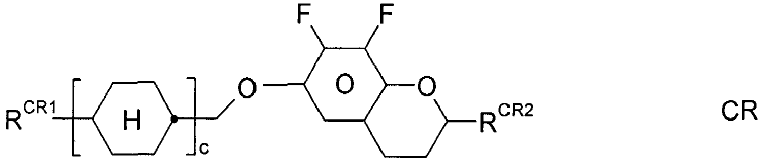 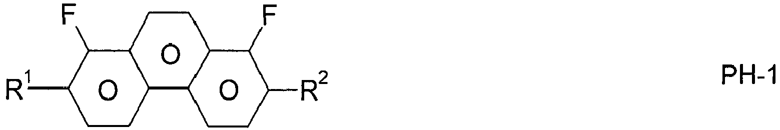 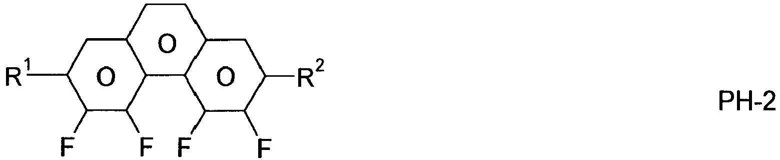 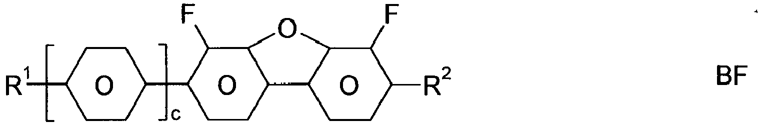 in which
   R^{B1}, R^{B2}, R^{CR1}, R^{CR2}, R¹, R² each, independently of one another, have the meaning of R^{2A}. c is 0, 1 or 2.
   The mixtures according to the invention preferably comprise the compounds of the formulae BC, CR, PH-1, PH-2 and/or BF in amounts of 3 to 20% by weight, in particular in amounts of 3 to 15% by weight.
   Particularly preferred compounds of the formulae BC and CR are the compounds BC-1 to BC-7 and CR-1 to CR-5, 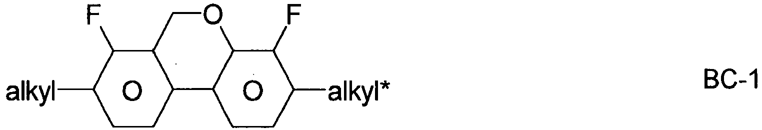 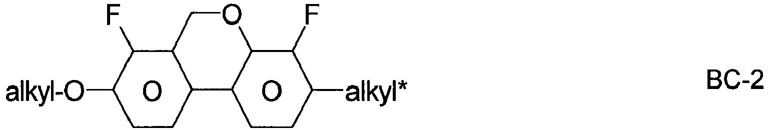 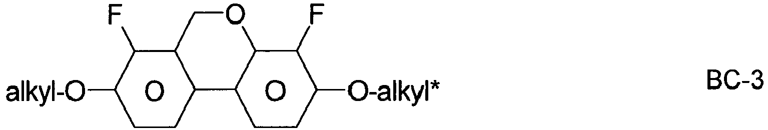 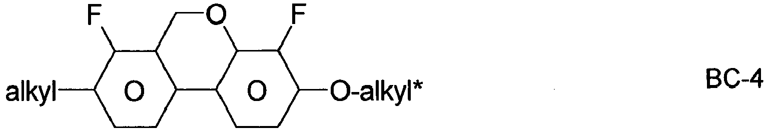 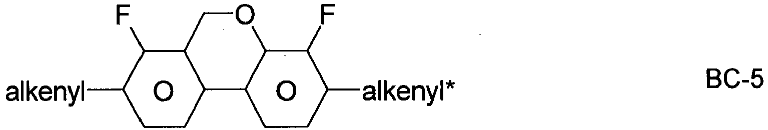 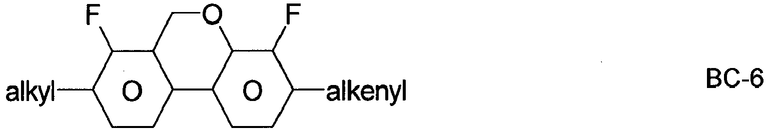 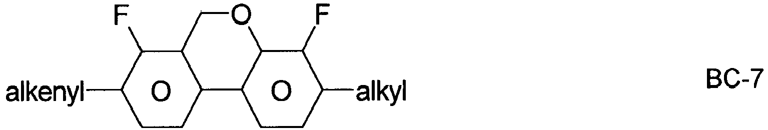 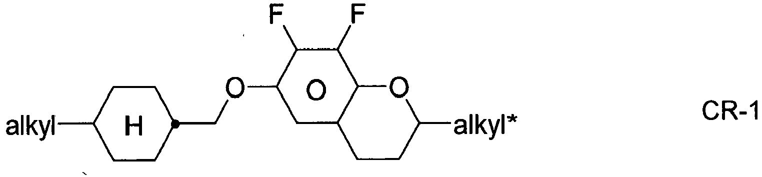 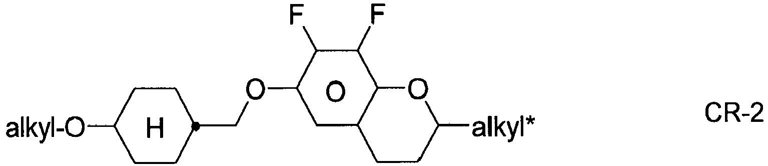 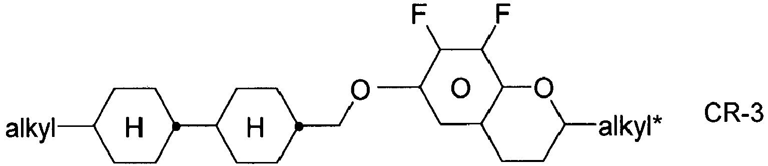 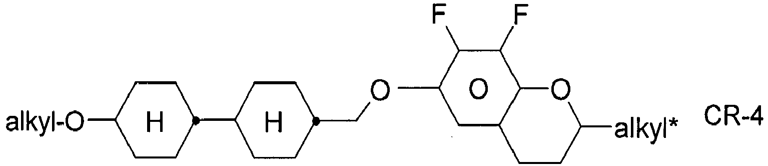 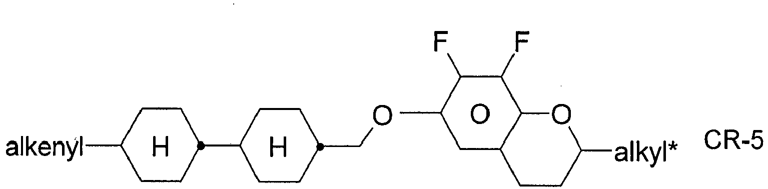 in which
   - alkyl and alkyl*: each, independently of one another, denote a straight-chain alkyl radical having 1-6 C atoms, and
   - alkenyl and alkenyl*: each, independently of one another, denote a straight-chain alkenyl radical having 2-6 C atoms.
   Very particular preference is given to mixtures comprising one, two or three compounds of the formula BC-2.
l) Preferred mixtures comprise one or more indane compounds of the formula In, 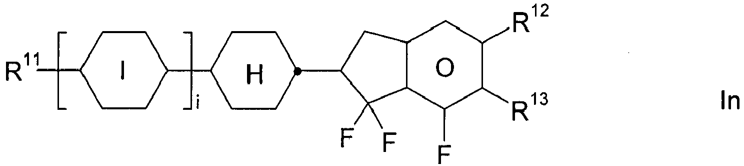 in which
   - R¹¹, R¹², and R¹³: each, independently of one another, denote a straight-chain alkyl, alkoxy, alkoxyalkyl or alkenyl radical having 1-6 C atoms,
   - R¹² and R¹³: additionally denote halogen, preferably F, 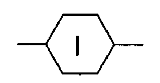 denotes 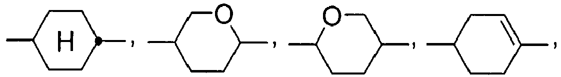 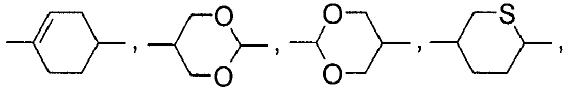 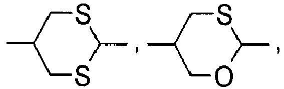
   - i: denotes 0, 1 or 2.
   Preferred compounds of the formula In are the compounds of the formulae In-1 to In-16 indicated below: 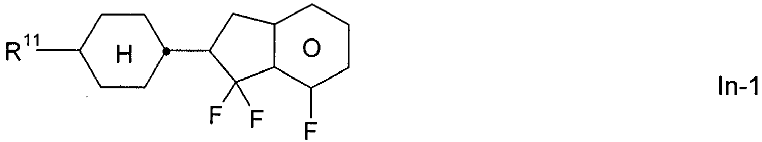 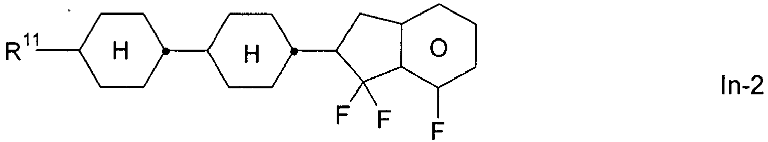 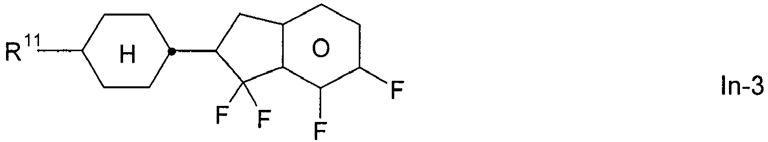 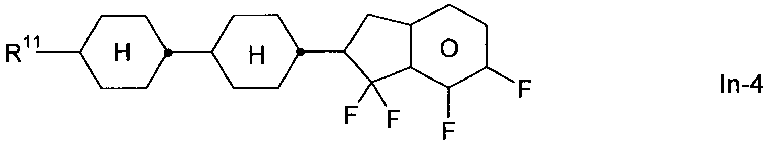 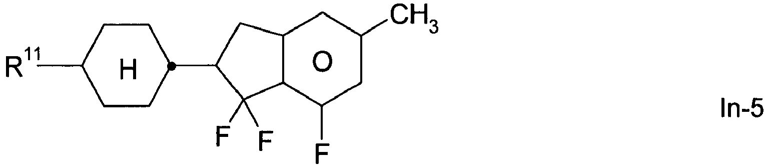 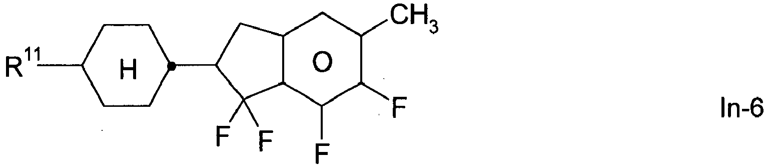 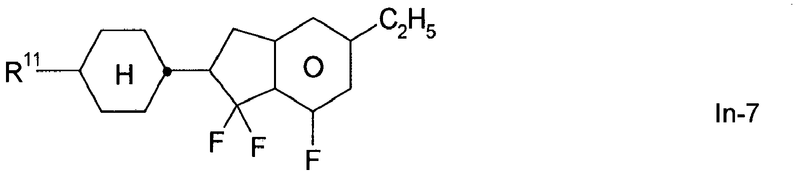 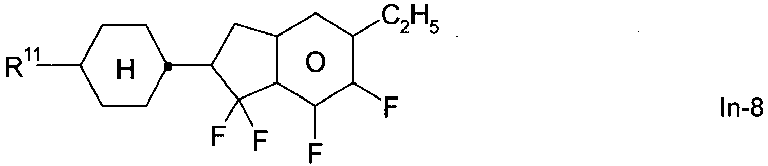 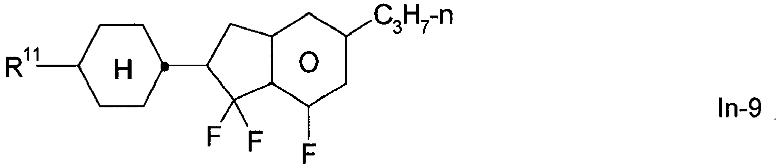 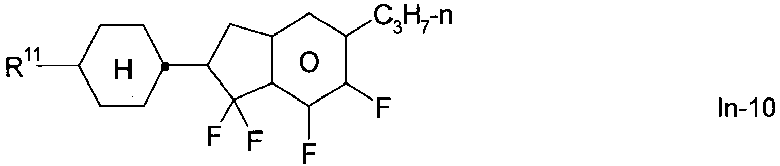 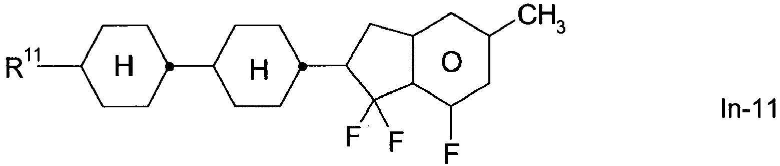 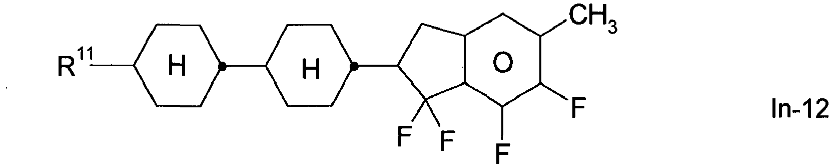 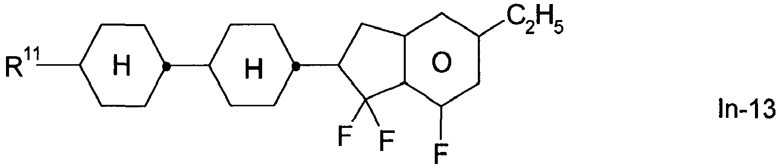 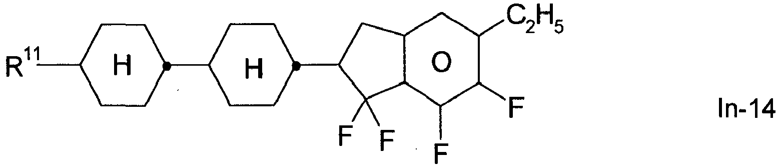 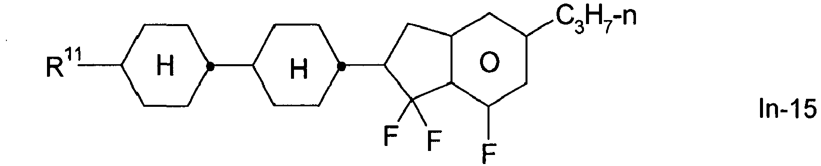 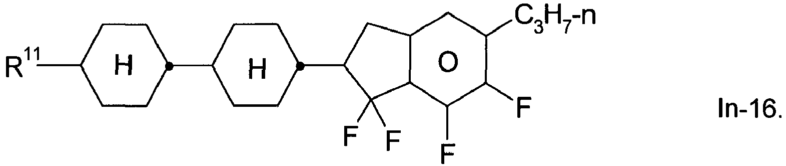 Particular preference is given to the compounds of the formulae In-1, In-2, In-3 and In-4.
   The compounds of the formula In and the sub-formulae In-1 to In-16 are preferably employed in the mixtures according to the invention in concentrations ≥ 5% by weight, in particular 5 - 30% by weight and very particularly preferably 5 - 25% by weight.
m) Preferred mixtures additionally comprise one or more compounds of the formulae L-1 to L-11, 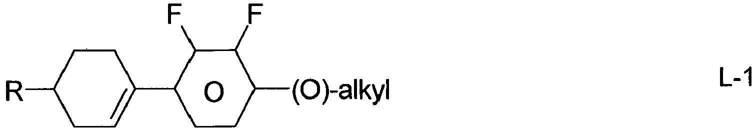 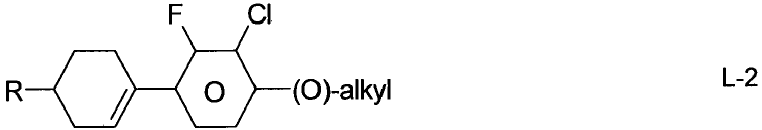 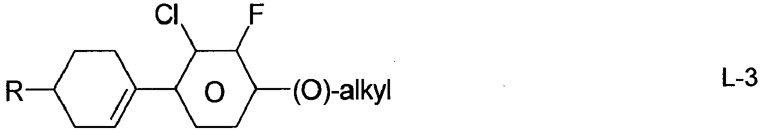 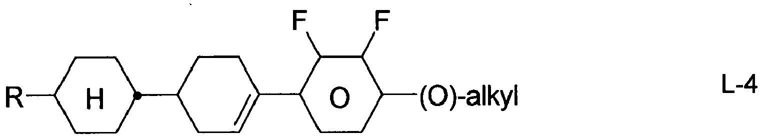 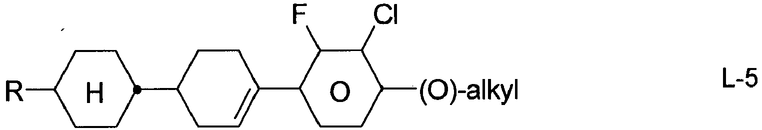 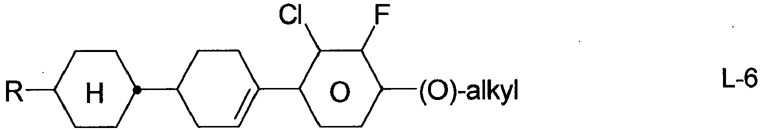 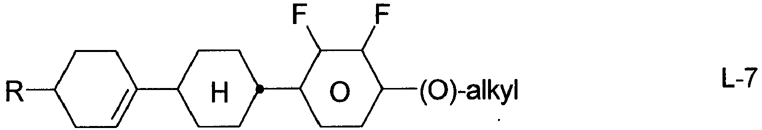 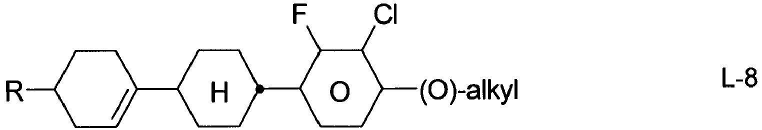 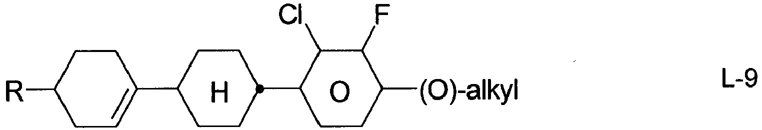 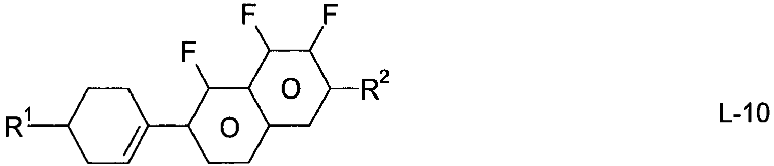 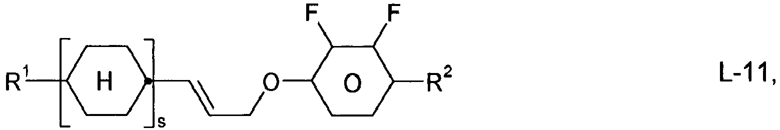 in which
   R, R¹ and R² each, independently of one another, have the meanings indicated for R^{2A} in Claim 2, and alkyl denotes an alkyl radical having 1-6 C atoms. s denotes 1 or 2.
   Particular preference is given to the compounds of the formulae L-1 and L-4, in particular L-4.
   The compounds of the formulae L-1 to L-11 are preferably employed in concentrations of 5 - 50% by weight, in particular 5 - 40% by weight and very particularly preferably 10 - 40% by weight.
n) The medium additionally comprises one or more compounds of the formula EY 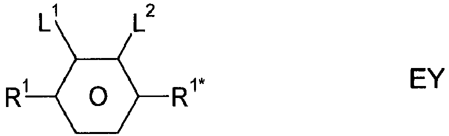 in which R¹, R^{1*}, L¹ and L² have the meanings indicated in formula I. In the compounds of the formula EY, R¹ and R^{1*} preferably denote alkoxy having ≥ 2 C atoms, and L¹ = L² = F. Particular preference is given to the compounds of the formulae 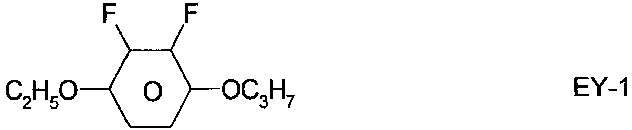 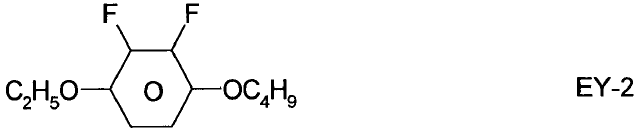 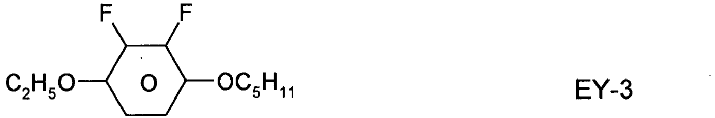 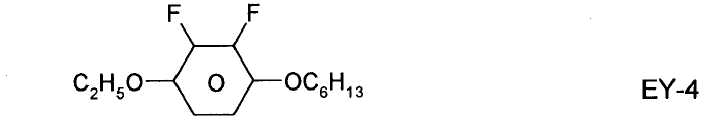 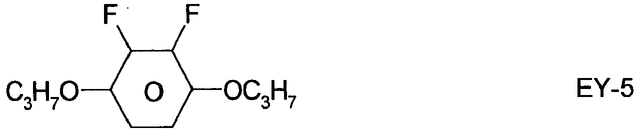 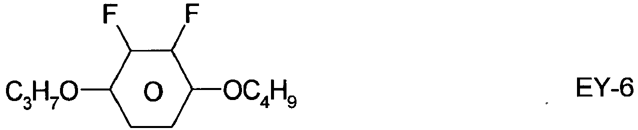 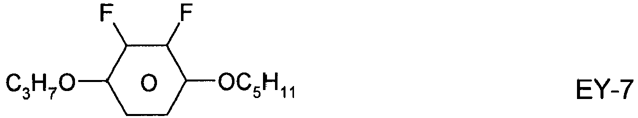 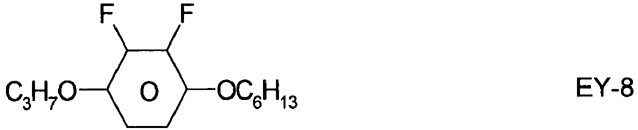 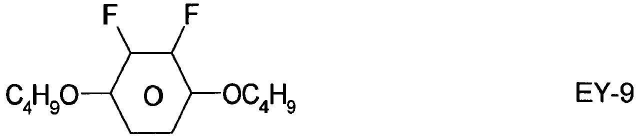 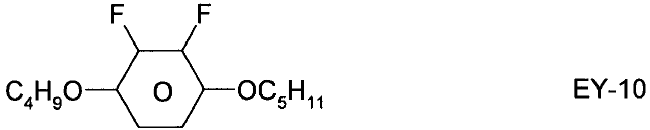 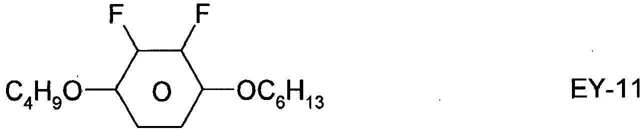 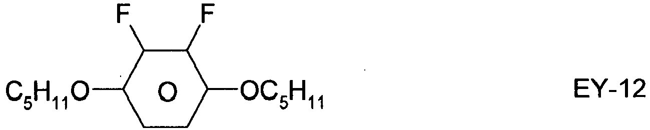 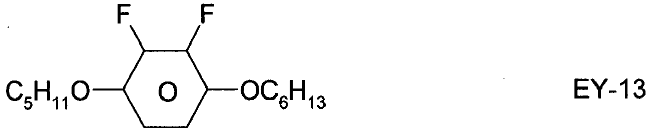 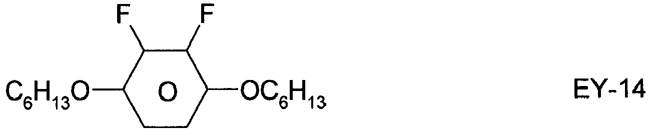 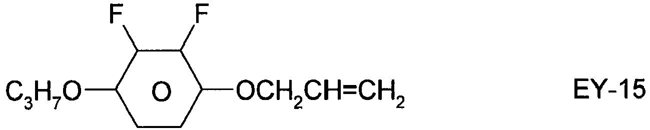 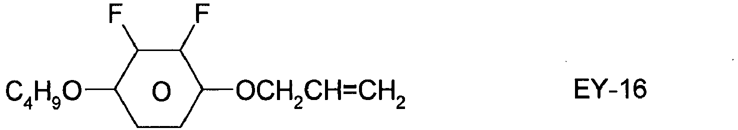 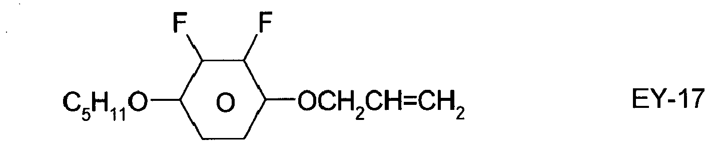 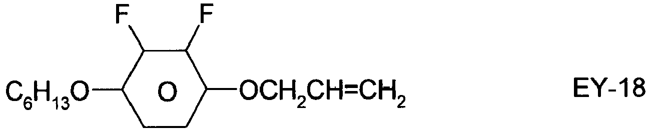 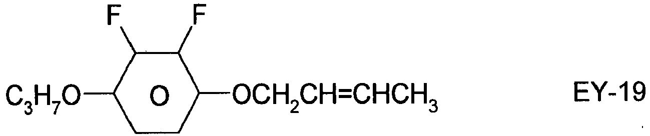 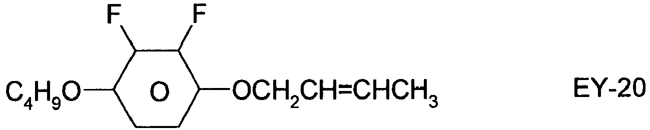 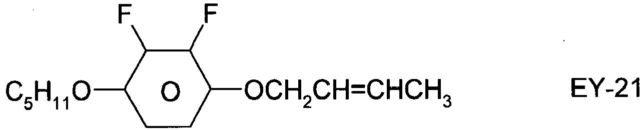 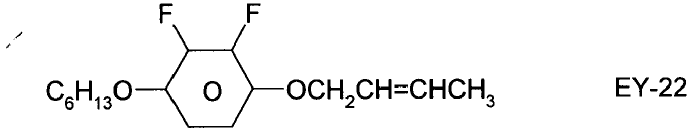 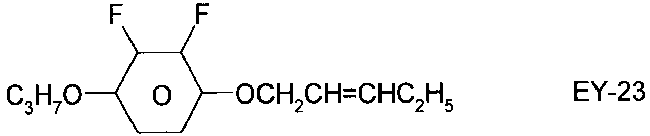 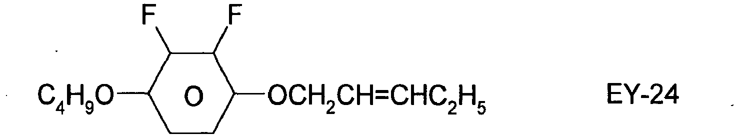 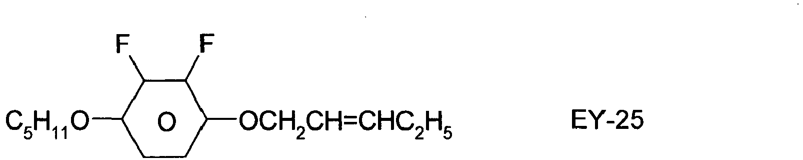 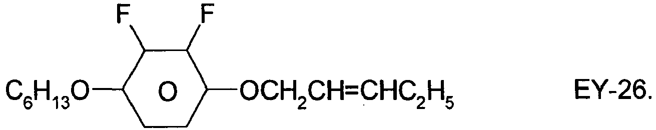 Particularly preference is given to the compounds of the formulae EY-1 to EY-12, in particular EY-2, EY-9 and EY-10.
o) The medium additionally comprises one or more tolane compounds of the formulae To-1 to To-12, 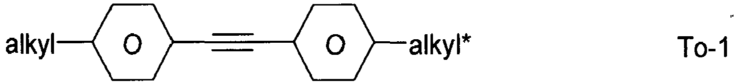 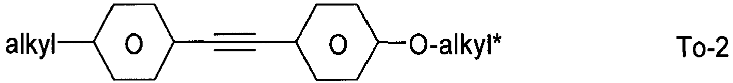 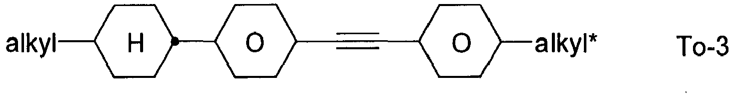 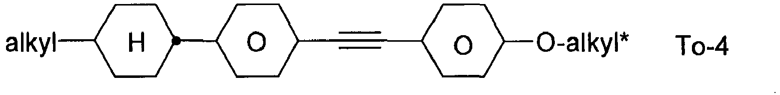 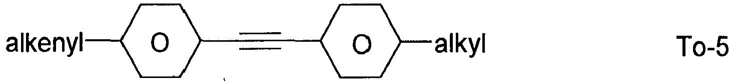 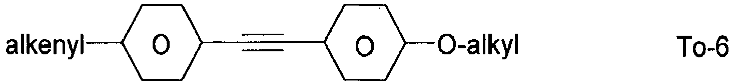 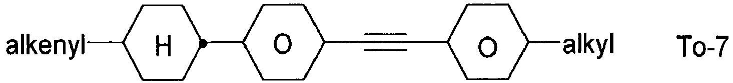 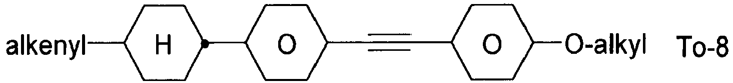 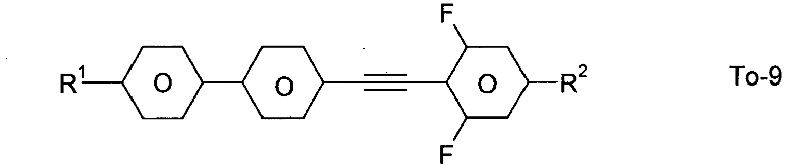 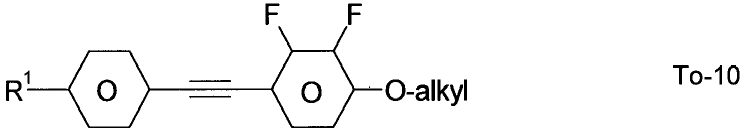 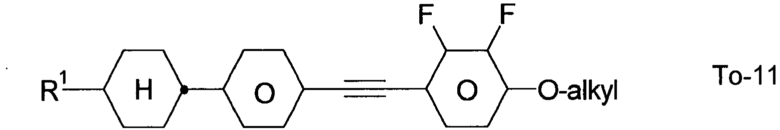 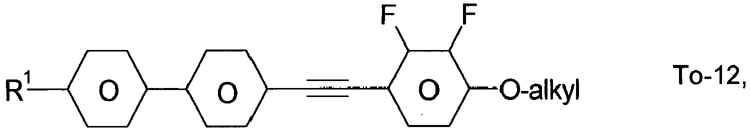 in which
   R¹ and R² each, independently of one another, have the meaning of R¹ in Claim 1, preferably denote straight-chain alkyl, alkoxy or alkenyl, in particular straight-chain alkyl having 1 to 6 C atoms,
   alkyl and alkyl* each, independently of one another, denote a straight-chain alkyl radical having 1-6 C atoms, alkoxy denotes a straight-chain alkoxy radical having 1-6 C atoms, and alkenyl denotes a straight-chain alkenyl radical having 2-6 C atoms.
   Particularly preferred tolanes are the compounds of the formulae To-1, To-2, To-4, To-9, To-10 and To-11.

Very particularly preferred mixture concepts are indicated below: (the acronyms used are explained in Table A. n and m here each, independently of one another, denote 1-6).

Preferred mixture concepts preferably comprise
- at least one compound of the formula I-1 (acronym: PPOY-n-Om);
- at least one compound of the formula PPOY-n-Om and at least one compound of the formula PY-n-Om; preferably PPOY-3-O2 and PY-3-02;
- at least one compound of the formula PPOY-n-Om and at least one compound of the formula CY-n-Om; preferably PPOY-3-O2 and CY-3-02
- at least one compound of the formula PPOY-n-Om and at least one compound of the formula CCY-n-Om, preferably PPOY-3-O2 in combination with at least one compound selected from the group of the compounds of the formulae CCY-3-02, CCY-3-01, CCY-3-03 and CCY-4-02;
- at least one compound of the formula PPOY-n-Om and at least one compound of the formula CPY-n-Om, preferably PPOY-3-O2 and at least one compound selected from the group of the compounds of the formulae CPY-2-02, CPY-3-02, CPY-3-03, CPY-3-04, CPY-4-03 and CPY-5-03;
- PPOY-3-O2 in combination with CPY-2-02 and/or CPY-3-02;
- PPOY-3-O2 in combination with CCY-3-1 and/or CCY-2-1;
- at least one compound of the formula PPOY-n-Om and at least one compound of the formula CCH-nm, preferably PPOY-3-O2 in combination with at least one compound selected from the group of the compounds of the formulae CCH-12, CCH-13, CCH-22, CCH-23, CCH-34 and CCH-35,
- at least one compound of the formula PPOY-n-Om and a compound of the formula PP-n-m and/or PP-n-Vm, preferably PP-1-2V1, most preferably PPOY-3-O2 in combination with PP-1-2V1;
- in each case at least one compound of the formula CPY-n-Om + CCY-n-Om + PPOY-n-Om;
- at least one compound of the formula PPOY-n-Om in combination with CC-n-V1, preferably CC-3-V1;

Preference is furthermore given to mixtures which comprise the following mixture components:
- CPY-n-Om, in particular CPY-2-02, CPY-3-02 and/or CPY-5-02, preferably in concentrations > 5%, in particular 10-30%, based on the mixture as a whole,
   and/or
- CY-n-Om, preferably CY-3-02, CY-3-04, CY-5-02 and/or CY-5-04, preferably in concentrations > 3%, in particular 5-20%, based on the mixture as a whole,
   and/or
- CCY-n-Om, preferably CCY-4-02, CCY-3-02, CCY-3-03, CCY-3-01 and/or CCY-5-02, preferably in concentrations > 5%, in particular 7-20%, based on the mixture as a whole,
   and/or
- PY-n-Om, preferably PY-3-O2 and/or PY-3-04, preferably in concentrations > 5%, in particular 7-20%, based on the mixture as a whole,
- PP-1-2V1, preferably in concentrations >1%, in particular 2-10%, based on the mixture as a whole,

The invention furthermore relates to an electro-optical display having active-matrix addressing based on the ECB, VA, PS-VA, PALC, IPS, PS-IPS, FFS or PS-FFS effect, characterised in that it contains, as dielectric, a liquid-crystalline medium according to one or more of Claims 1 to 9.

The liquid-crystalline medium according to the invention preferably has a nematic phase from ≤ -20°C to ≥ 70°C, particularly preferably from ≤ -30°C to ≥ 80°C, very particularly preferably from ≤ -40°C to ≥ 90°C.

The expression "have a nematic phase" here means on the one hand that no smectic phase and no crystallisation are observed at low temperatures at the corresponding temperature and on the other hand that clearing still does not occur on heating from the nematic phase. The investigation at low temperatures is carried out in a flow viscometer at the corresponding temperature and checked by storage in test cells having a layer thickness corresponding to the electro-optical use for at least 100 hours. If the storage stability at a temperature of -20°C in a corresponding test cell is 1000 h or more, the medium is referred to as stable at this temperature. At temperatures of -30°C and -40°C, the corresponding times are 500 h and 250 h respectively. At high temperatures, the clearing point is measured by conventional methods in capillaries.

The liquid-crystal mixture preferably has a nematic phase range of at least 60 K and a flow viscosity v₂₀ of at most 30 mm² · s⁻¹ at 20°C.

The values of the birefringence Δn in the liquid-crystal mixture are generally between 0.07 and 0.16, preferably between 0.08 and 0.12.

The liquid-crystal mixture according to the invention has a Δε of -0.5 to -8.0, in particular -2.5 to -6.0, where Δε denotes the dielectric anisotropy. The rotational viscosity γ₁ at 20°C is preferably ≤ 165 mPa·s, in particular ≤ 140 mPa·s.

The liquid-crystal media according to the invention have relatively low values for the threshold voltage (V₀). They are preferably in the range from 1.7 V to 3.0 V, particularly preferably ≤ 2.5 V and very particularly preferably ≤ 2.3 V.

For the present invention, the term "threshold voltage" relates to the capacitive threshold (V₀), also known as the Freedericks threshold, unless explicitly indicated otherwise.

In addition, the liquid-crystal media according to the invention have relatively high values for the voltage holding ratio in liquid-crystal cells.

In general, liquid-crystal media having a low addressing voltage or threshold voltage exhibit a lower voltage holding ratio than those having a higher addressing voltage or threshold voltage and vice versa.

For the present invention, the term "dielectrically positive compounds" denotes compounds having a Δε > 1.5, the term "dielectrically neutral compounds" denotes those having -1.5 ≤ Δε ≤ 1.5 and the term "dielectrically negative compounds" denotes those having Δε < -1.5. The dielectric anisotropy of the compounds is determined here by dissolving 10% of the compounds in a liquid-crystalline host and determining the capacitance of the resultant mixture in at least one test cell in each case having a layer thickness of 20 µm with homeotropic and with homogeneous surface alignment at 1 kHz. The measurement voltage is typically 0.5 V to 1.0 V, but is always lower than the capacitive threshold of the respective liquid-crystal mixture investigated.

All temperature values indicated for the present invention are in °C.

The mixtures according to the invention are suitable for all VA-TFT applications, such as, for example, VAN, MVA, (S)-PVA, ASV, PSA (polymer sustained VA) and PS-VA (polymer stabilized VA). They are furthermore suitable for IPS (in-plane switching) and FFS (fringe field switching) applications having negative Δε.

The nematic liquid-crystal mixtures in the displays according to the invention generally comprise two components A and B, which themselves consist of one or more individual compounds.

Component A has significantly negative dielectric anisotropy and gives the nematic phase a dielectric anisotropy of ≤ -0.5. Besides one or more compounds of the formula I, it preferably comprises the compounds of the formulae IIA, IIB and/or IIC, furthermore compounds of the formula III.

The proportion of component A is preferably between 45 and 100%, in particular between 60 and 100%.

For component A, one (or more) individual compound(s) which has (have) a value of Δε ≤ -0.8 is (are) preferably selected. This value must be more negative, the smaller the proportion A in the mixture as a whole.

Component B has pronounced nematogeneity and a flow viscosity of not greater than 30 mm² · s⁻¹, preferably not greater than 25 mm² · s⁻¹, at 20°C.

Particularly preferred individual compounds in component B are extremely low-viscosity nematic liquid crystals having a flow viscosity of not greater than 18 mm² · s⁻¹, preferably not greater than 12 mm² · s⁻¹, at 20°C.

Component B is monotropically or enantiotropically nematic, has no smectic phases and is able to prevent the occurrence of smectic phases down to very low temperatures in liquid-crystal mixtures. For example, if various materials of high nematogeneity are added to a smectic liquid-crystal mixture, the nematogeneity of these materials can be compared through the degree of suppression of smectic phases that is achieved.

The mixture may optionally also comprise a component C, comprising compounds having a dielectric anisotropy of Δε ≥1.5. These so-called positive compounds are generally present in a mixture of negative dielectric anisotropy in amounts of ≤ 20% by weight, based on the mixture as a whole.

A multiplicity of suitable materials is known to the person skilled in the art from the literature. Particular preference is given to compounds of the formula III.

In addition, these liquid-crystal phases may also comprise more than 18 components, preferably 18 to 25 components.

Besides one or more compounds of the formula I, the phases preferably comprise 4 to 15, in particular 5 to 12, and particularly preferably < 10, compounds of the formulae IIA, IIB and/or IIC and optionally III.

Besides compounds of the formula I and the compounds of the formulae IIA, IIB and/or IIC and optionally III, other constituents may also be present, for example in an amount of up to 45% of the mixture as a whole, but preferably up to 35%, in particular up to 10%.

The other constituents are preferably selected from nematic or nematogenic substances, in particular known substances, from the classes of the azoxybenzenes, benzylideneanilines, biphenyls, terphenyls, phenyl or cyclohexyl benzoates, phenyl or cyclohexyl cyclohexanecarboxylates, phenylcyclohexanes, cyclohexylbiphenyls, cyclohexylcyclohexanes, cyclohexylnaphthalenes, 1,4-biscyclohexylbiphenyls or cyclohexylpyrimidines, phenyl- or cyclohexyldioxanes, optionally halogenated stilbenes, benzyl phenyl ethers, tolans and substituted cinnamic acid esters.

The most important compounds which are suitable as constituents of liquid-crystal phases of this type can be characterised by the formula IV

R²⁰-L-G-E-R²¹ IV

in which L and E each denote a carbo- or heterocyclic ring system from the group formed by 1,4-disubstituted benzene and cyclohexane rings, 4,4'-disubstituted biphenyl, phenylcyclohexane and cyclohexylcyclohexane systems, 2,5-disubstituted pyrimidine and 1,3-dioxane rings, 2,6-disubstituted naphthalene, di- and tetrahydronaphthalene, quinazoline and tetrahydroquinazoline,

| | | |
|---|---|---|
| G denotes | -CH=CH- | -N(O)=N- |
| | -CH=CQ- | -CH=N(O)- |
| | -C≡C- | -CH₂-CH₂- |
| | -CO-O- | -CH₂-O- |
| | -CO-S- | -CH₂-S- |
| | -CH=N- | -COO-Phe-COO- |
| | -CF₂O- | -CF=CF- |
| | -OCF₂- | -OCH₂- |
| | -(CH₂)₄- | -(CH₂)₃O- |

or a C-C single bond, Q denotes halogen, preferably chlorine, or -CN, and R²⁰ and R²¹ each denote alkyl, alkenyl, alkoxy, alkoxyalkyl or alkoxycarbonyloxy having up to 18, preferably up to 8, carbon atoms, or one of these radicals alternatively denotes CN, NC, NO₂, NCS, CF₃, SF₅, OCF₃, F, Cl or Br.

In most of these compounds, R²⁰ and R²¹ are different from one another, one of these radicals usually being an alkyl or alkoxy group. Other variants of the proposed substituents are also common. Many such substances or also mixtures thereof are commercially available. All these substances can be prepared by methods known from the literature.

It goes without saying for the person skilled in the art that the VA, IPS or FFS mixture according to the invention may also comprise compounds in which, for example, H, N; O, Cl and F have been replaced by the corresponding isotopes.

The LC media which can be used in accordance with the invention are prepared in a manner which is conventional per se, for example by mixing one or more of the above-mentioned compounds with one or more polymerisable compounds, as defined above, and optionally with further liquid-crystalline compounds and/or additives. In general, the desired amount of the components used in smaller amount is dissolved in the components making up the principal constituent, advantageously at elevated temperature. It is also possible to mix solutions of the components in an organic solvent, for example in acetone, chloroform or methanol, and to remove the solvent again, for example by distillation, after thorough mixing. The invention furthermore relates to a process for the preparation of the LC media according to the invention.

The mixtures according to the invention may furthermore comprise conventional additives, such as, for example, stabilisers, antioxidants, UV absorbers, nanoparticles, microparticles, etc.

The structure of the liquid-crystal displays according to the invention corresponds to the usual geometry, as described, for example, in EP-A 0 240 379.

The structure of the LC displays according to the invention corresponds to the usual geometry for PSA displays, as described in the prior art cited in the introduction. Geometries without protrusions are preferred, in particular those in which, in addition, the electrode on the colour-filter side is unstructured and only the electrode on the TFT side has slots. Particularly suitable and preferred electrode structures for PS-VA displays are described, for example, in US 2006/0066793 A1.

Combination of liquid-crystal mixtures according to the invention with the polymerised compounds mentioned above and below effects low threshold voltages, low rotational viscosity values and very good low-temperature stabilities in the LC media according to the invention with retention of high clearing points and high HR values, and allows the rapid establishment of a particularly low pre-tilt angle in PSA displays. In particular, the LC media exhibit significantly reduced response times, in particular also grey-shade response times, compared with the media from the prior art in PSA displays.

Polymerisable compounds, so-called reactive mesogens (RMs), for example as disclosed in U.S. 6,861,107, may furthermore be added to the mixtures according to the invention in concentrations of preferably is 0.01 - 5% by weight, in particular 0.01 - 1% by weight and particularly preferably 0.01 - 0.5% by weight based on the mixture. These mixtures may optionally also comprise an initiator, as described, for example, in U.S. 6,781,665. The initiator, for example Irganox-1076 from Ciba Chemicals, is preferably added to the mixture comprising polymerisable compounds in amounts of 0-1%. Mixtures of this type can be used for so-called polymer-stabilised VA modes (PS-VA) or PSA (polymer sustained VA), in which polymerisation of the reactive mesogens is intended to take place in the liquid-crystalline mixture. The prerequisite for this is that the liquid-crystal mixture does not itself comprise any polymerisable components.

The IPS and PSA displays according to the invention have two electrodes, preferably in the form of transparent layers, which are applied to one or both of the substrates which form the LC cell. Either in each case one electrode is applied to each of the two substrates, as, for example, in PSA-VA, PSA-OCB or PSA-TN displays according to the invention, or both electrodes are applied to only one of the two substrates, while the other substrate has no electrode, as, for example, in PSA-IPS or PSA-FFS displays according to the invention.

The following meanings apply above and below:
The term "PSA" is, unless indicated otherwise, used to represent PS displays and PSA displays.

The terms "active layer" and "switchable layer" mean a layer in an electrooptical display, for example an LC display, that comprises one or more molecules having structural and optical anisotropy, like for example LC molecules, which change their orientation upon an external stimulus like an electric or magnetic field, resulting in a change of the transmission of the layer for polarized or unpolarized light.

As used herein, the terms "tilt" and "tilt angle" will be understood to mean a tilted alignment of the LC molecules of an LC medium relative to the surfaces of the cell in an LC display (here preferably a PSA display). The tilt angle here denotes the average angle (< 90°) between the longitudinal molecular axes of the LC molecules (LC director) and the surface of the plane-parallel outer plates which form the LC cell. A low value for the tilt angle (i.e. a large deviation from the 90° angle) corresponds to a large tilt here. A suitable method for measurement of the tilt angle is given in the examples. Unless indicated otherwise, tilt angle values disclosed above and below relate to this measurement method.

As used herein, the terms "reactive mesogen" and "RM" will be understood to mean a compound containing a mesogenic or liquid crystalline skeleton, and one or more functional groups attached thereto which are suitable for polymerisation and are also referred to as "polymerisable group" or "P".

Unless stated otherwise, the term "polymerisable compound" as used herein will be understood to mean a polymerisable monomeric compound.

As used herein, the term "low-molecular-weight compound" will be understood to mean to a compound that is monomeric and/or is not prepared by a polymerisation reaction, as opposed to a "polymeric compound" or a "polymer".

As used herein, the term "unpolymerisable compound" will be understood to mean a compound that does not contain a functional group that is suitable for polymerisation under the conditions usually applied for the polymerisation of the RMs.

The term "mesogenic group" as used herein is known to the person skilled in the art and described in the literature, and means a group which, due to the anisotropy of its attracting and repelling interactions, essentially contributes to causing a liquid-crystal (LC) phase in low-molecular-weight or polymeric substances. Compounds containing mesogenic groups (mesogenic compounds) do not necessarily have to have an LC phase themselves. It is also possible for mesogenic compounds to exhibit LC phase behaviour only after mixing with other compounds and/or after polymerisation. Typical mesogenic groups are, for example, rigid rod- or disc-shaped units. An overview of the terms and definitions used in connection with mesogenic or LC compounds is given in Pure Appl. Chem. 2001, 73(5), 888 and C. Tschierske, G. Pelzl, S. Diele, Angew. Chem. 2004, 116, 6340-6368.

The term "spacer group", hereinafter also referred to as "Sp", as used herein is known to the person skilled in the art and is described in the literature, see, for example, Pure Appl. Chem. 2001, 73(5), 888 and C. Tschierske, G. Pelzl, S. Diele, Angew. Chem. 2004, 116, 6340-6368. As used herein, the terms "spacer group" or "spacer" mean a flexible group, for example an alkylene group, which connects the mesogenic group and the polymerisable group(s) in a polymerisable mesogenic compound.

For the purposes of this invention, the term "liquid-crystalline medium" is intended to denote a medium which comprises an LC mixture and one or more polymerisable compounds (such as, for example, reactive mesogens). The term "LC mixture" (or "host mixture") is intended to denote a liquid-crystalline mixture which consists exclusively of unpolymerisable, low-molecular-weight compounds, preferably of two or more liquid-crystalline compounds and optionally further additives, such as, for example, chiral dopants or stabilisers. "Unpolymerisable" means that the compounds are stable or unreactive to a polymerisation reaction, at least under the conditions used for polymerisation of the polymerisable compounds.

Particular preference is given to liquid-crystalline mixtures which have a nematic phase, in particular a nematic phase at room temperature.

Preferred PS mixtures comprising at least one compound of the formula I are distinguished, in particular, as follows:
∘ The concentration of the polymerisable component, based on the mixture as a whole, is 0.01 - 5% by weight, in particular 0.01 - 1% by weight and particularly preferably 0.01 - 0.5% by weight.
∘ The liquid-crystalline medium comprises no compounds containing a terminal vinyloxy group (-O-CH=CH₂).
∘ A PS-VA or PSA display containing a PS mixture according to the invention preferably has a pre-tilt angle of 85-89°, particularly preferably 87-89°.

In the VA-type displays according to the invention, the molecules in the layer of the liquid-crystalline medium in the switched-off state are aligned perpendicular to the electrode surfaces (homeotropically) or have a tilted homeotropic alignment. On application of an electrical voltage to the electrodes, a realignment of the LC molecules with the longitudinal molecular axes parallel to the electrode surfaces takes place.

LC mixtures according to the invention for use in displays of the VA type have a negative dielectric anisotropy Δε, preferably of -0.5 to -10, in particular -2.5 to -7.5, at 20°C and 1 kHz.

The birefringence Δn in LC mixtures according to the invention for use in displays of the VA type is preferably below 0.16, particularly preferably between 0.06 and 0.14, in particular between 0.07 and 0.12.

The LC mixtures and LC media according to the invention may also comprise further additives known to the person skilled in the art and described in the literature, such as, for example, polymerisation initiators, inhibitors, stabilisers, surface-active substances or chiral dopants. These may be polymerisable or unpolymerisable. Polymerisable additives are accordingly classed in the polymerisable component or component A). Unpolymerisable additives are accordingly classed in the LC mixture (host mixture) or the unpolymerisable component or component B).

The LC mixtures and LC media may comprise, for example, one or more chiral dopants, preferably selected from the group consisting of compounds from Table B below.

Furthermore, 0 to 15%, preferably 0 to 10%, of one or more additives selected from the group comprising pleochroic dyes, nanoparticles, conductive salts, complex salts and substances for modifying the dielectric anisotropy, the viscosity and/or the alignment of the nematic phases can be added to the LC media. Suitable and preferred conductive salts are, for example, ethyldimethyldodecylammonium 4-hexoxybenzoate, tetrabutylammonium tetraphenylborate or complex salts of crown ethers (cf., for example, Haller et al., Mol. Cryst. Liq. Cryst. 24, 249-258, 1973). Substances of this type are described, for example, in DE-A-22 09 127, DE-A-22 40 864, DE-A-23 21 632, DE-A-23 38 281, DE-A-24 50 088, DE-A-26 37 430 and DE-A-28 53 728.

For the production of PSA displays, the polymerisable compounds are polymerised or cross-linked (if a compound contains two or more polymerisable groups) by in-situ polymerisation in the liquid-crystalline medium between the substrates of the LC display with application of a voltage. The polymerisation can be carried out in one step. It is also possible firstly to carry out the polymerisation in a first step with application of a voltage in order to generate a pretilt angle, and subsequently, in a second polymerisation step, to polymerise or crosslink the compounds which have not reacted in the first step without an applied voltage (end curing).

Suitable and preferred polymerisation methods are, for example, thermal or photopolymerisation, preferably photopolymerisation, in particular UV photopolymerisation. If necessary, one or more initiators may also be added here. Suitable conditions for the polymerisation, and suitable types and amounts of initiators, are known to the person skilled in the art and are described in the literature. For example, the commercially available photoinitiators Irgacure651^{®}, Irgacure184^{®}, Irgacure907^{®}, Irgacure369^{®} or Darocure1173^{®} (Ciba AG) are suitable for free-radical polymerisation. If an initiator is employed, its proportion is preferably 0.001 to 5%, particularly preferably 0.001 to 1%. However, the polymerisation can also be carried out without addition of an initiator. In a further preferred embodiment, the liquid-crystalline medium comprises no polymerisation initiator.

The polymerisable component A) or the liquid-crystalline medium may also comprise one or more stabilisers in order to prevent undesired spontaneous polymerisation of the RMs, for example during storage or transport. Suitable types and amounts of stabilisers are known to the person skilled in the art and are described in the literature. For example, the commercially available stabilisers from the Irganox^{®} series (Ciba AG), such as, for example, Irganox^{®} 1076, are particularly suitable. If stabilisers are employed, their proportion, based on the total amount of the RMs or the polymerisable component A), is preferably 10 - 10,000 ppm, particularly preferably 50 - 500 ppm.

The polymerisable compounds are also suitable for polymerisation without initiator, which is accompanied by considerable advantages, such as, for example, lower material costs and in particular less contamination of the liquid-crystalline medium by possible residual amounts of the initiator or degradation products thereof.

Particular preference is given to LC media comprising one, two or three polymerisable compounds.

Preference is furthermore given to achiral polymerisable compounds and to LC media in which the compounds of component A) and/or B) are selected exclusively from the group consisting of achiral compounds.

Preference is furthermore given to LC media in which the polymerisable component or component A) comprises one or more polymerisable compounds containing one polymerisable group (monoreactive) and one or more polymerisable compounds containing two or more, preferably two, polymerisable groups (di- or multireactive).

Preference is furthermore given to PSA displays and LC media in which the polymerisable component or component A) comprises exclusively polymerisable compounds containing two polymerisable groups (direactive).

The polymerisable compounds can be added individually to the LC media, but it is also possible to use mixtures comprising two or more polymerisable compounds according to the invention. In the case of polymerisation of such mixtures, copolymers are formed. The invention furthermore relates to the polymerisable mixtures mentioned above and below. The polymerisable compounds can be mesogenic or non-mesogenic. Particular preference is given to polymerisable mesogenic compounds, also known as reactive mesogens (RMs).

Suitable and preferred RMs for use in LC media and PSA displays according to the invention are known to the skilled person.

Besides the compounds of the formulae IIA and/or IIB and/or IIC, one or more compounds of the formula I, the mixtures according to the invention preferably comprise one or more of the compounds from Table A indicated below.

**Table A**

| |
|---|
| The following abbreviations are used: (n, m, m', z: each, independently of one another, 1, 2, 3, 4, 5 or 6; (O)CₘH₂ₘ₊₁ means OCₘH₂ₘ₊₁ or CₘH₂ₘ₊₁) |
| 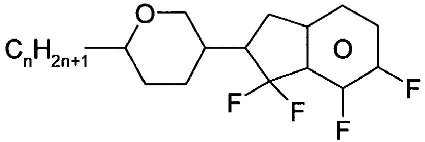 |
| **AIK-n-F** |
| 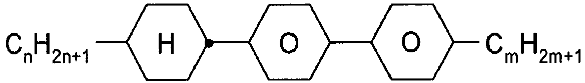 |
| **BCH-nm** |
| 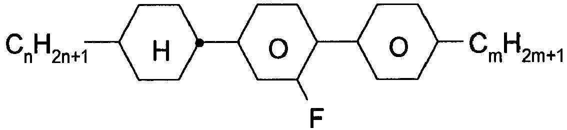 |
| **BCH-nmF** |
| 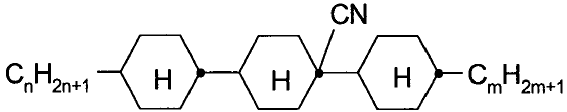 |
| **BCN-nm** |
| 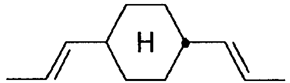 |
| **C-1V-V1** |
| 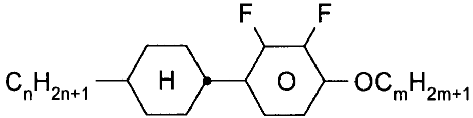 |
| **CY-n-Om** |
| 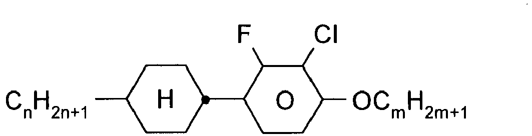 |
| **CY(F,Cl)n,Om** |
| 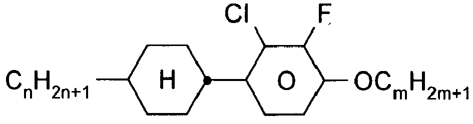 |
| **CY(Cl,F)-n-Om** |
| 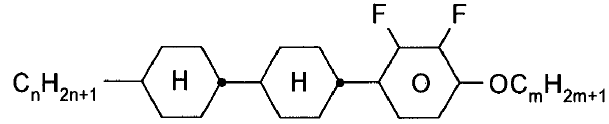 |
| **CCY-n-Om** |
| 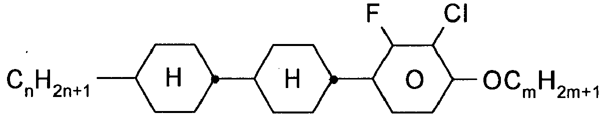 |
| **CCY(F,Cl)n-Om** |
| 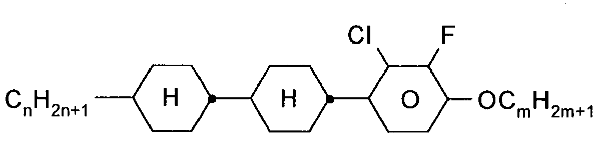 |
| **CCY(Cl,F)-n-Om** |
| 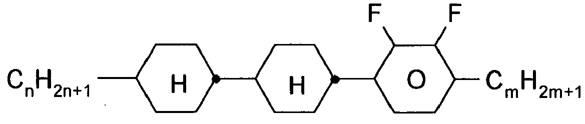 |
| **CCY-n-m** |
| 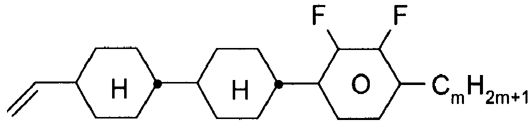 |
| **CCY-V-m** |
| 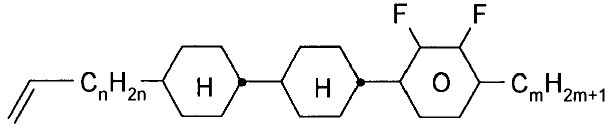 |
| **CCT-Vn-m** |
| 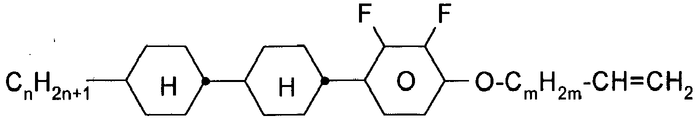 |
| **CCY-n-OmV** |
| 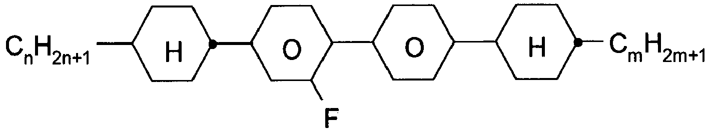 |
| **CBC-nmF** |
| 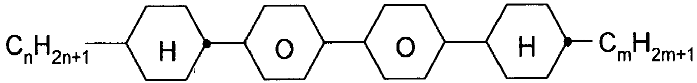 |
| **CBC-nm** |
| 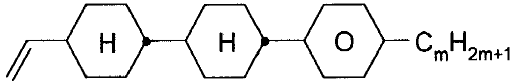 |
| **CCP-V-m** |
| 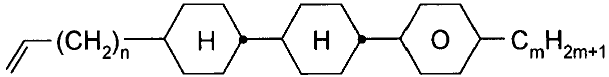 |
| **CCP-Vn-m** |
| 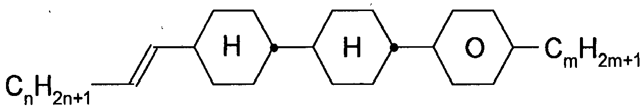 |
| **CCP-nV-m** |
| 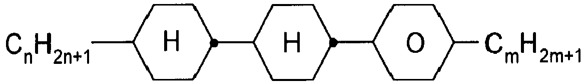 |
| **CCP-n-m** |
| 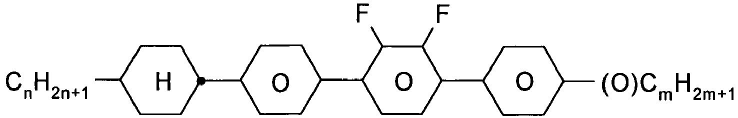 |
| **CPYP-n-(O)m** |
| 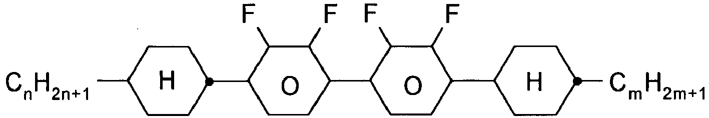 |
| **CYYC-n-m** |
| 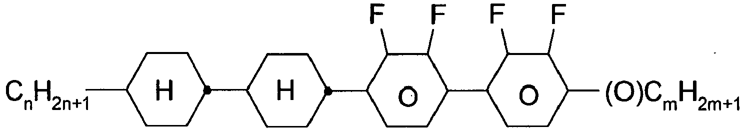 |
| **CCYY-n-(O)m** |
| 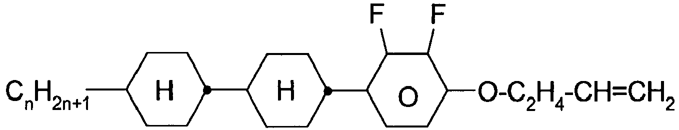 |
| **CCY-n-O2V** |
| 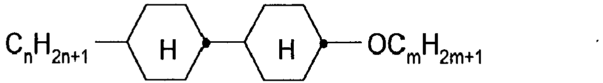 |
| **CCH-nOm** |
| 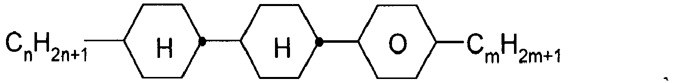 |
| **CCP-n-m** |
| 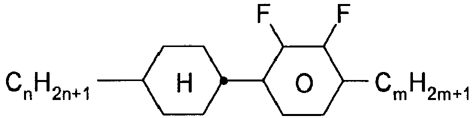 |
| **CY-n-m** |
| 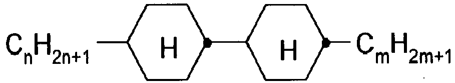 |
| **CCH-nm** |
| 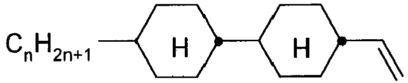 |
| **CC-n-V** |
| 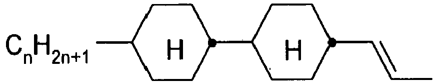 |
| **CC-n-V1** |
| 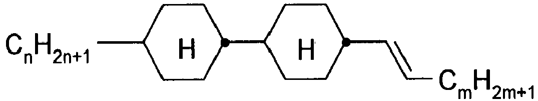 |
| **CC-n-Vm** |
| 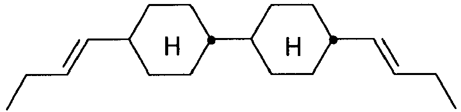 |
| **CC-2V-V2** |
| 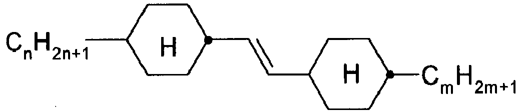 |
| **CVC-n-m** |
| 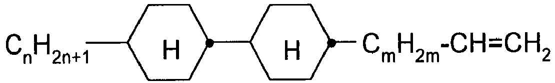 |
| **CC-n-mV** |
| 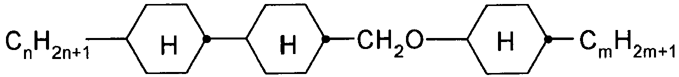 |
| **CCOC-n-m** |
| 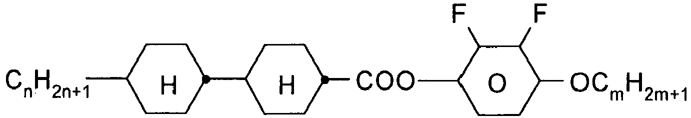 |
| **CP-nOmFF** |
| 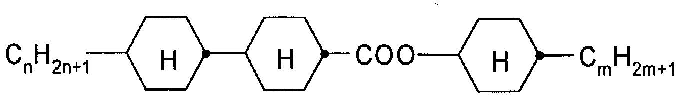 |
| **CH-nm** |
| 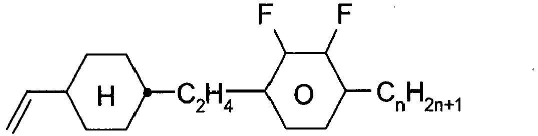 |
| **CEY-V-n** |
| 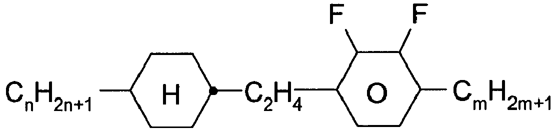 |
| **CEY-n-m** |
| 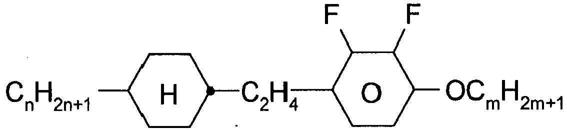 |
| **CEY-n-Om** |
| 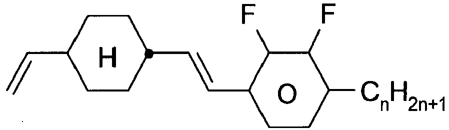 |
| **CVY-V-n** |
| 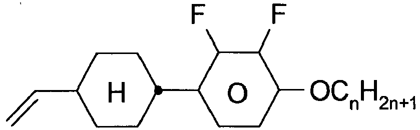 |
| **CY-V-On** |
| 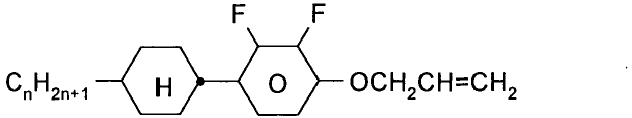 |
| **CY-n-O1V** |
| 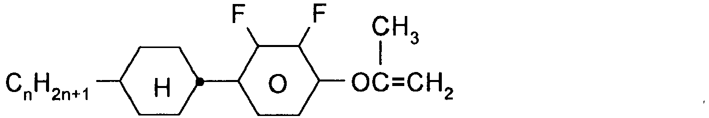 |
| **CY-n-OC(CH₃)=CH₂** |
| 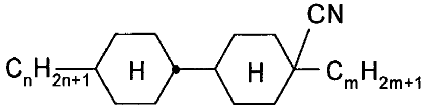 |
| **CCN-nm** |
| 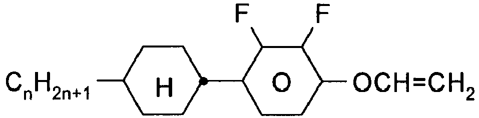 |
| **CY-n-OV** |
| 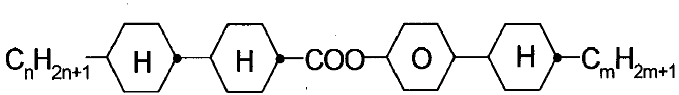 |
| **CCPC-nm** |
| 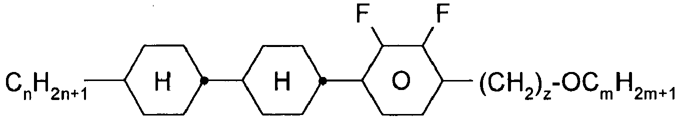 |
| **CCY-n-zOm** |
| 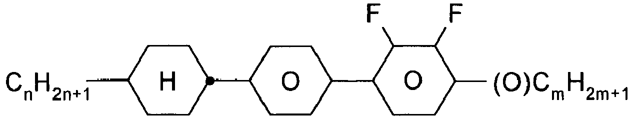 |
| **CPY-n-(O)m** |
| 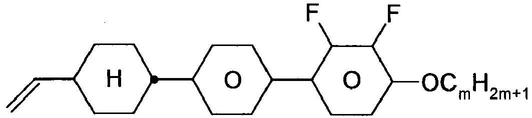 |
| **CPY-V-Om** |
| 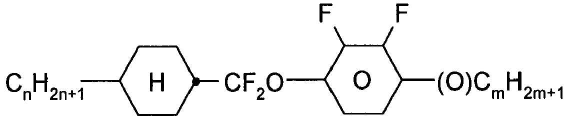 |
| **CQY-n-(O)m** |
| 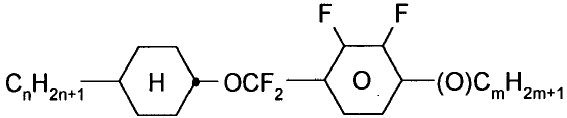 |
| **CQIY-n-(O)m** |
| 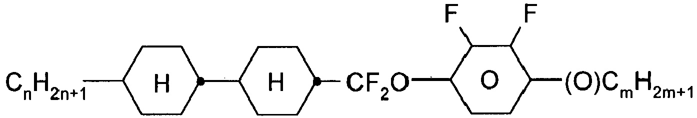 |
| **CCQY-n-(O)m** |
| 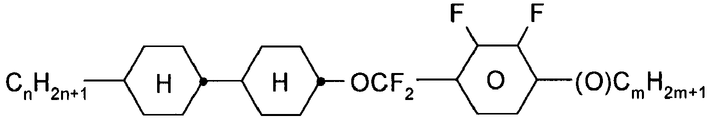 |
| **CCQIY-n-(O)m** |
| 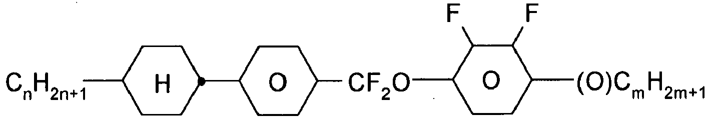 |
| **CPQY-n-(O)m** |
| 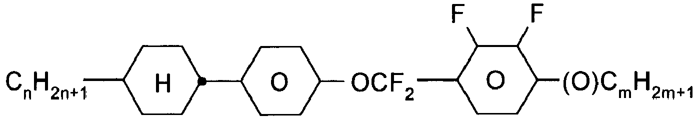 |
| **CPQIY-n-(O)m** |
| 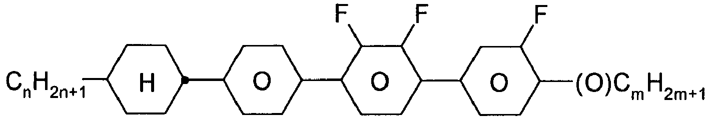 |
| **CPYG-n-(O)m** |
| 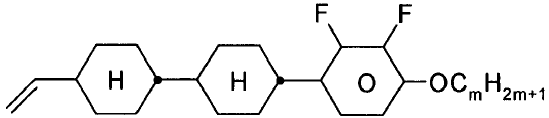 |
| **CCY-V-Om** |
| 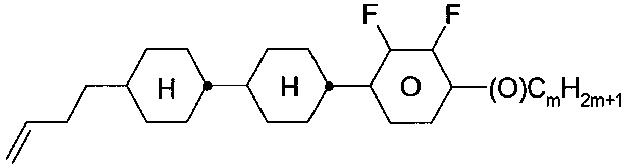 |
| **CCY-V2-(O)m** |
| 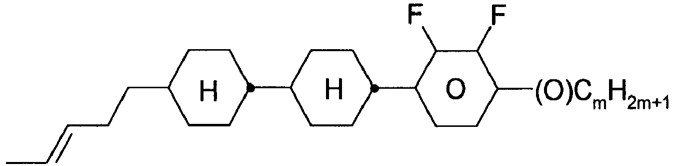 |
| **CCY-1V2-(O)m** |
| 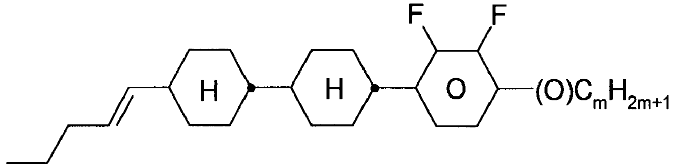 |
| **CCY-3V-(O)m** |
| 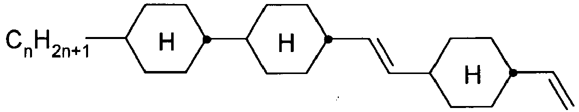 |
| **CCVC-n-V** |
| 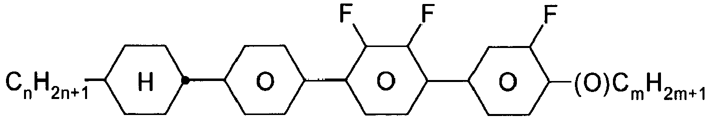 |
| **CPYG-n-(O)m** |
| 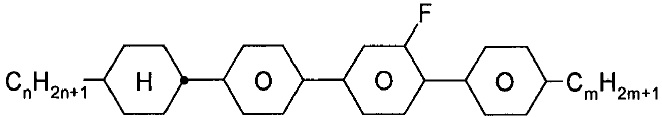 |
| **CPGP-n-m** |
| 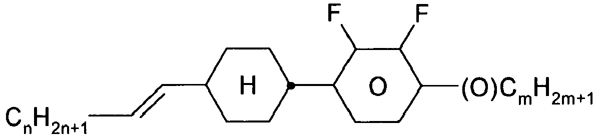 |
| **CY-nV-(O)m** |
| 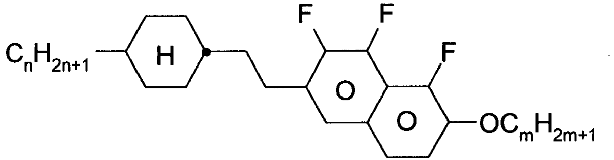 |
| **CENaph-n-Om** |
| 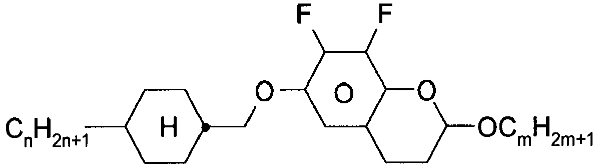 |
| **COChrom-n-Om** |
| 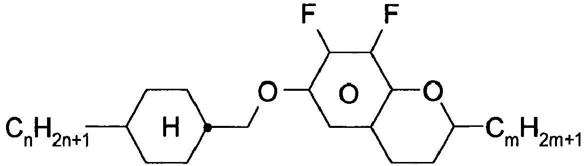 |
| **COChrom-n-m** |
| 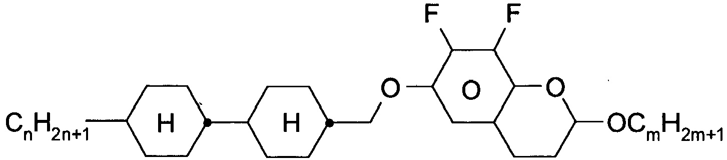 |
| **CCOChrom-n-Om** |
| 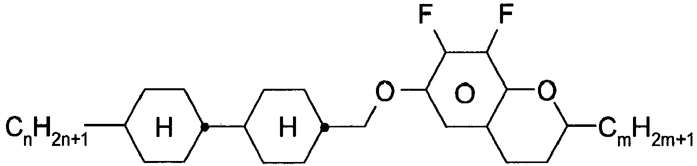 |
| **CCOChrom-n-m** |
| 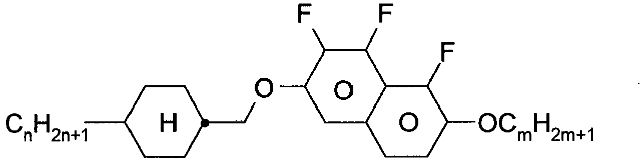 |
| **CONaph-n-Om** |
| 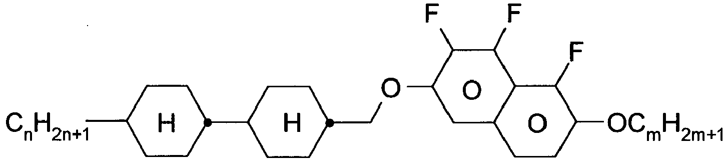 |
| **CCONaph-n-Om** |
| 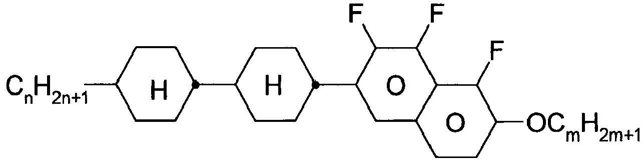 |
| **CCNaph-n-Om** |
| 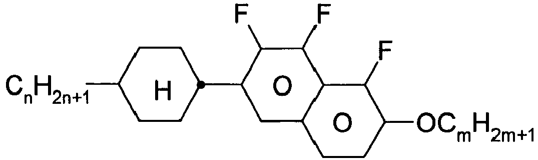 |
| **CNaph-n-Om** |
| 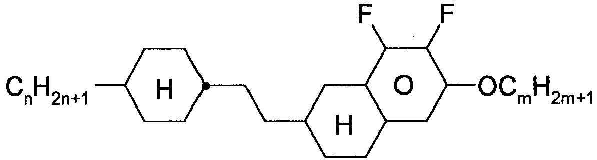 |
| **CETNaph-n-Om** |
| 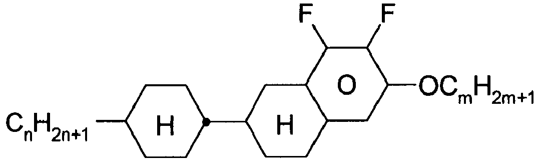 |
| **CTNaph-n-Om** |
| 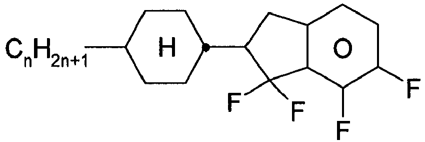 |
| **CK-n-F** |
| 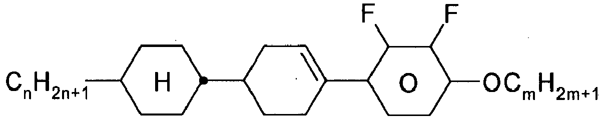 |
| **CLY-n-Om** |
| 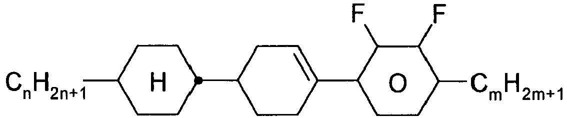 |
| **CLY-n-m** |
| 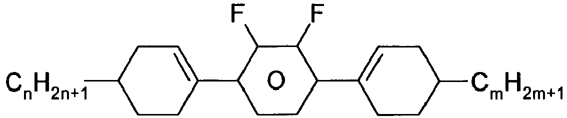 |
| **LYLI-n-m** |
| 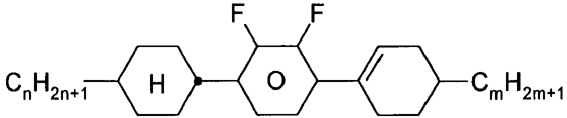 |
| **CYLI-n-m** |
| 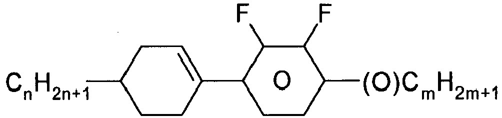 |
| **LY-n-(O)m** |
| 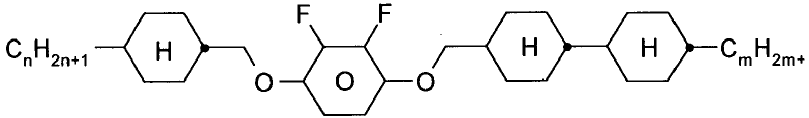 |
| **COYOICC-n-m** |
| 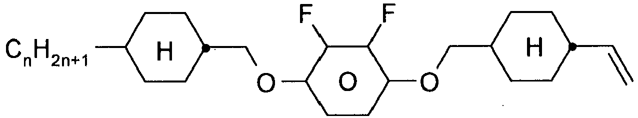 |
| **COYOIC-n-V** |
| 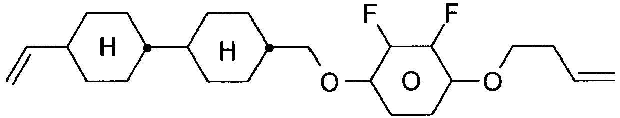 |
| **CCOY-V-O2V** |
| 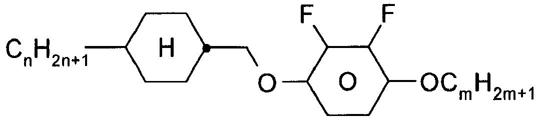 |
| **COY-n-Om** |
| 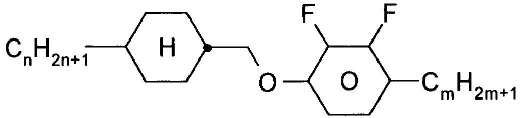 |
| **COY-n-m** |
| 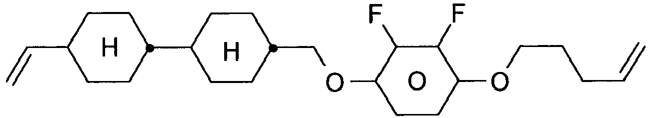 |
| **CCOY-V-O3V** |
| 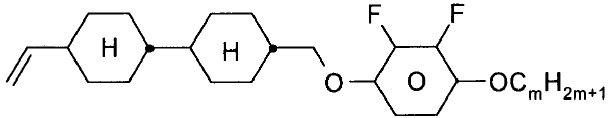 |
| **CCOY-V-Om** |
| 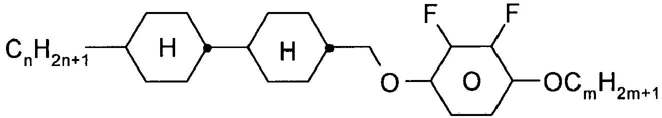 |
| **CCOY-n-Om** |
| 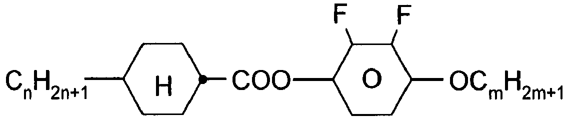 |
| **D-nOmFF** |
| 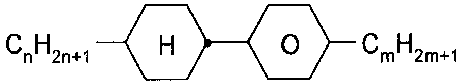 |
| **PCH-nm** |
| 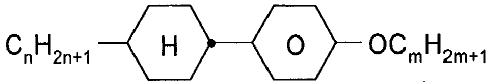 |
| **PCH-nOm** |
| 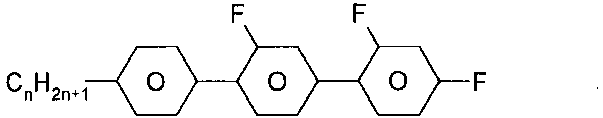 |
| **PGIGI-n-F** |
| 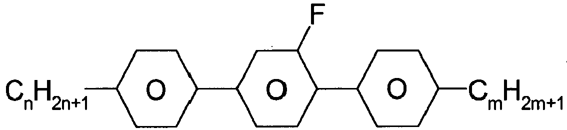 |
| **PGP-n-m** |
| 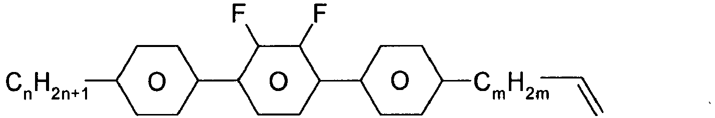 |
| **PYP-n-mV** |
| 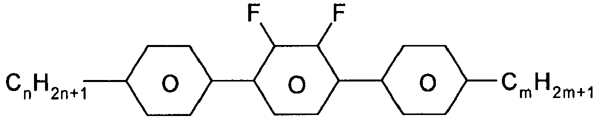 |
| **PYP-n-m** |
| 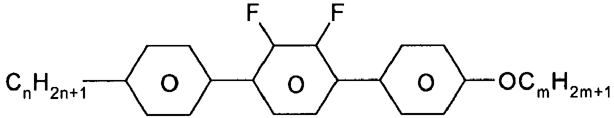 |
| **PYP-n-Om** |
| 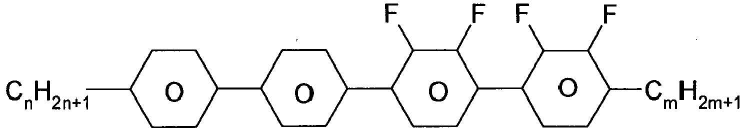 |
| **PPYY-n-m** |
| 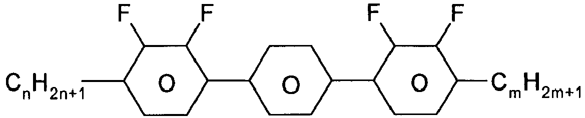 |
| **YPY-n-m** |
| 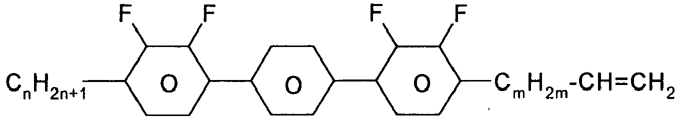 |
| **YPY-n-mV** |
| 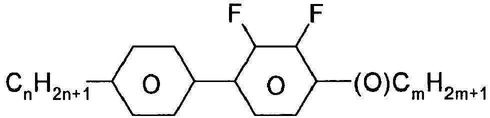 |
| **PY-n-(O)m** |
| 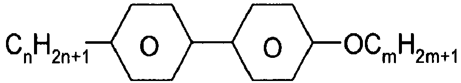 |
| **PP-n-Om** |
| 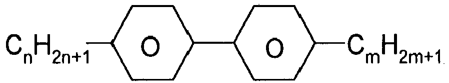 |
| **PP-n-m** |
| 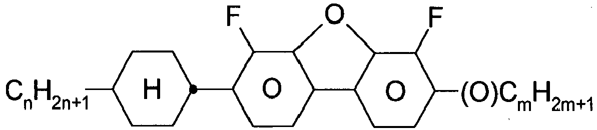 |
| **C-DFDBF-n-(O)m** |
| 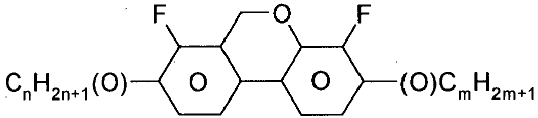 |
| **DFDBC-n(O)-(O)m** |
| 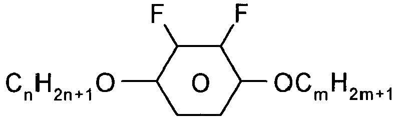 |
| **Y-nO-Om** |
| 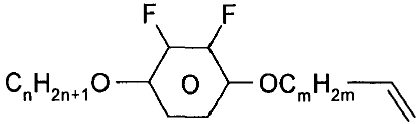 |
| **Y-nO-OmV** |
| 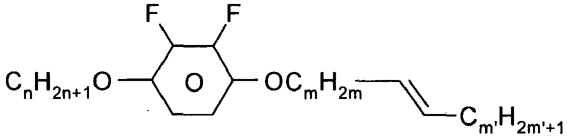 |
| **Y-nO-OmVm'** |

The liquid-crystal mixtures which can be used in accordance with the invention are prepared in a manner which is conventional per se. In general, the desired amount of the components used in lesser amount is dissolved in the components making up the principal constituent, advantageously at elevated temperature. It is also possible to mix solutions of the components in an organic solvent, for example in acetone, chloroform or methanol, and to remove the solvent again, for example by distillation, after thorough mixing.

By means of suitable additives, the liquid-crystal phases according to the invention can be modified in such a way that they can be employed in any type of, for example, ECB, VAN, IPS, GH or ASM-VA LCD display that has been disclosed to date.

The dielectrics may also comprise further additives known to the person skilled in the art and described in the literature, such as, for example, UV absorbers, antioxidants, nanoparticles and free-radical scavengers. For example, 0-15% of pleochroic dyes, stabilisers or chiral dopants may be added. Suitable stabilisers for the mixtures according to the invention are, in particular, those listed in Table B.

For example, 0-15% of pleochroic dyes may be added, furthermore conductive salts, preferably ethyldimethyldodecylammonium 4-hexoxybenzoate, tetrabutylammonium tetraphenylboranate or complex salts of crown ethers (cf., for example, Haller et al., Mol. Cryst. Liq. Cryst. Volume 24, pages 249-258 (1973)), may be added in order to improve the conductivity or substances may be added in order to modify the dielectric anisotropy, the viscosity and/or the alignment of the nematic phases. Substances of this type are described, for example, in DE-A 22 09 127, 22 40 864, 23 21 632, 23 38 281, 24 50 088, 26 37 430 and 28 53 728.

Table B shows possible dopants which can be added to the mixtures according to the invention. If the mixtures comprise a dopant, it is employed in amounts of 0.01-4% by weight, preferably 0.1-1.0% by weight.

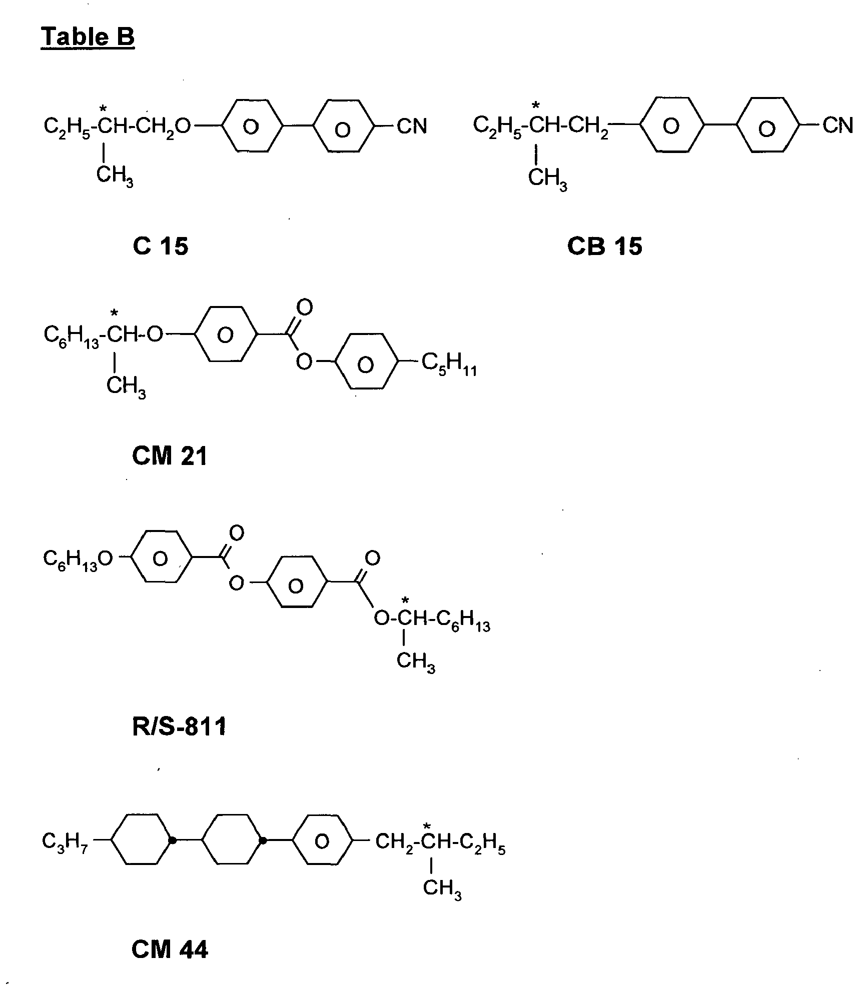

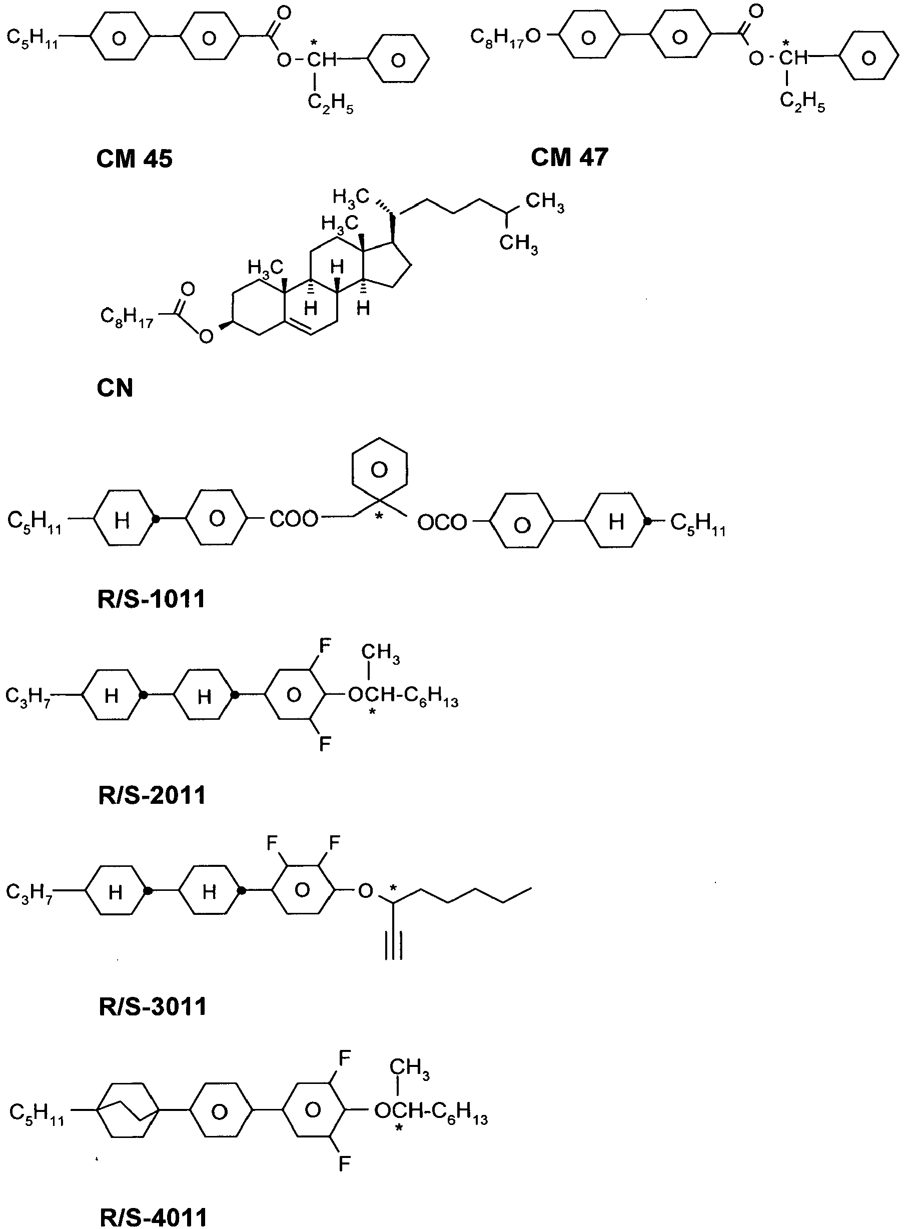

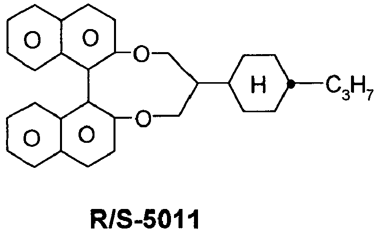

Stabilisers which can be added, for example, to the mixtures according to the invention in amounts of up to 10% by weight, based on the total amount of the mixture, preferably 0.01 to 6% by weight, in particular 0.1 to 3% by weight, are shown below in Table C. Preferred stabilisers are, in particular, BHT derivatives, for example 2,6-di-tert-butyl-4-alkylphenols, and Tinuvin 770, as well as Tunivin P and Tempol.

**Table C**

| Table C shows possible stabilisers which can be added to the LC media according to the invention. | |
|---|---|
| (n here denotes an integer from 1 to 12, preferably 1, 2, 3, 4, 5, 6, 7 or 8, terminal methyl groups are not shown). | |
| 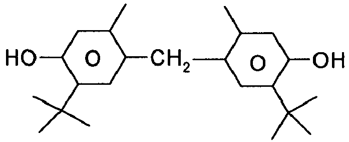 | 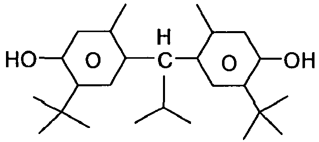 |
| 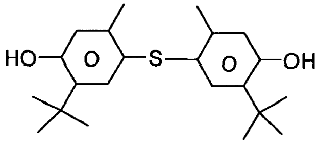 | 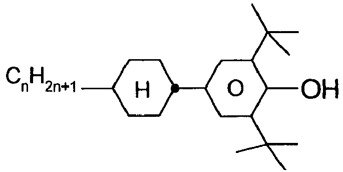 |
| 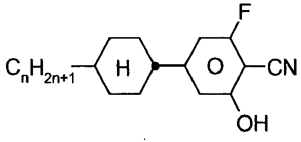 | 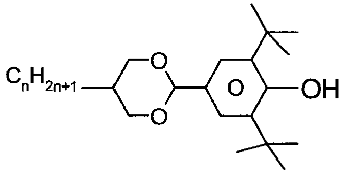 |
| 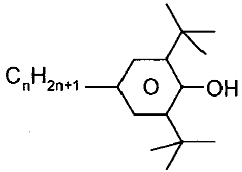 | 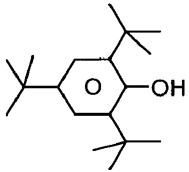 |
| 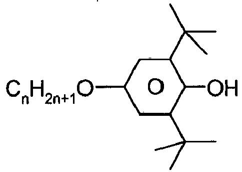 | 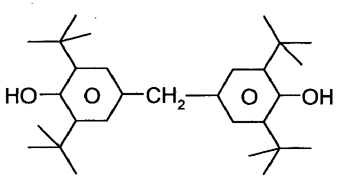 |
| 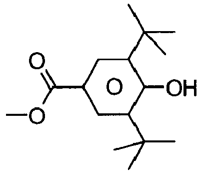 | 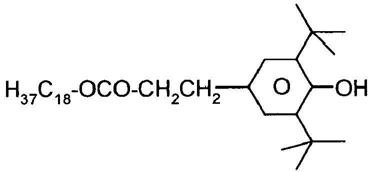 |
| 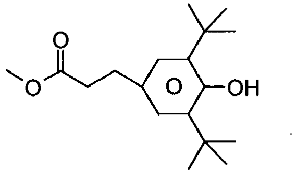 | 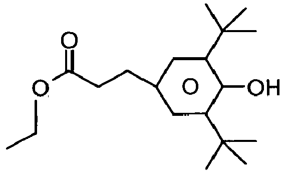 |
| 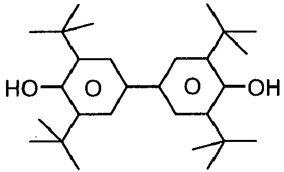 | 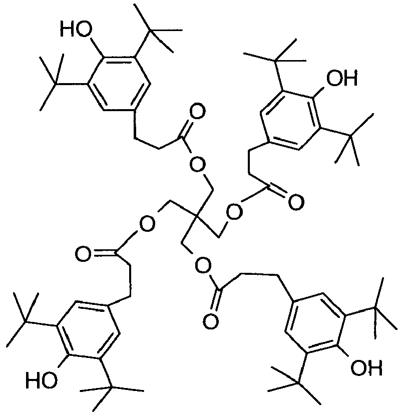 |
| 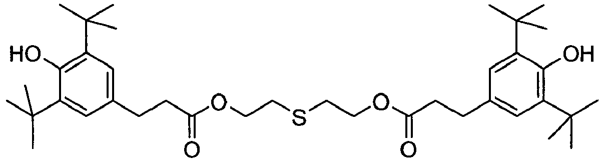 | |
| 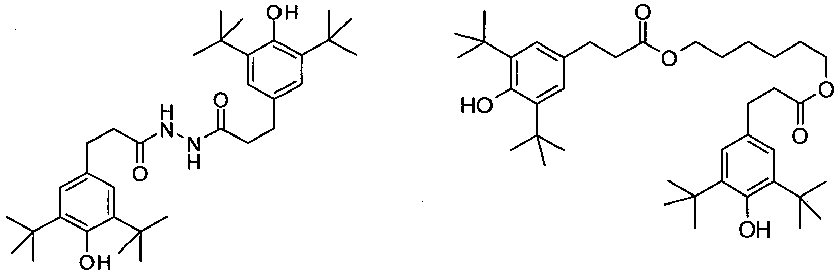 | |
| 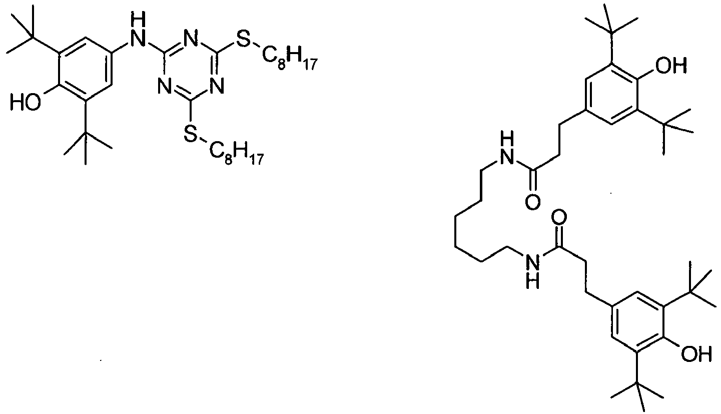 | |
| 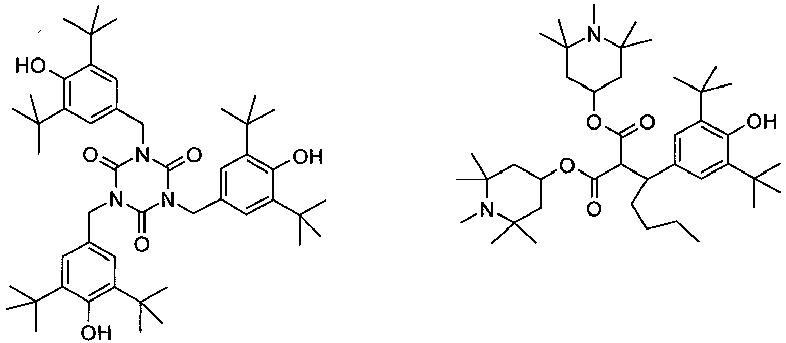 | |
| 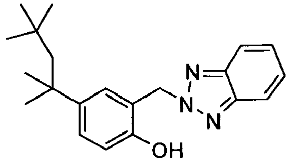 | 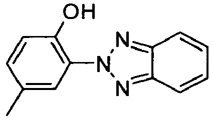 |
| 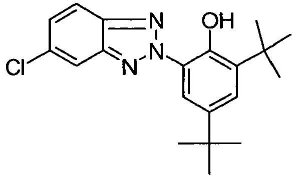 | 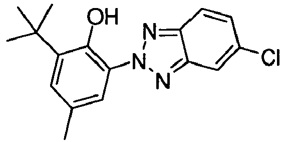 |
| 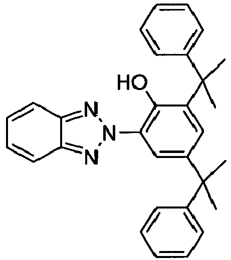 | 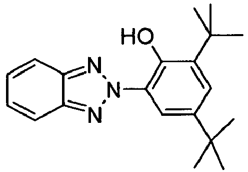 |
| 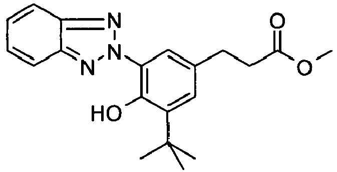 | 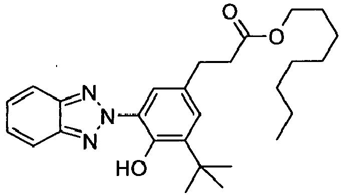 |
| 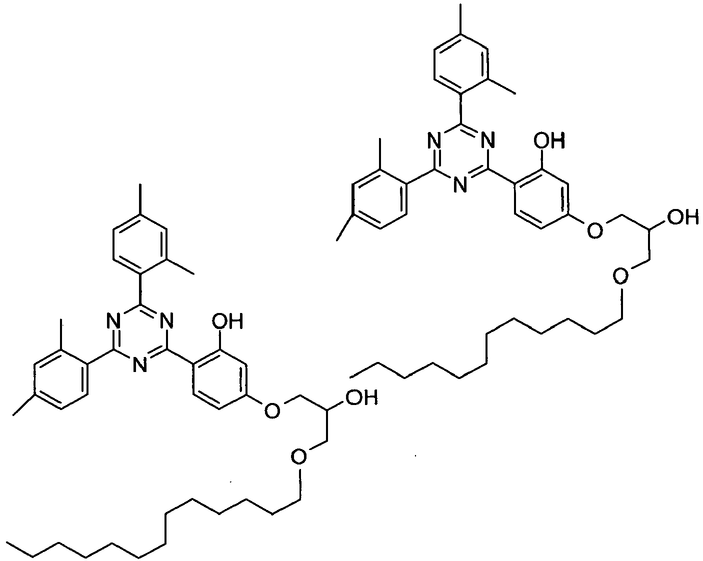 | |
| 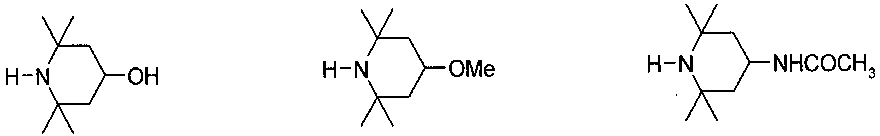 | |
| 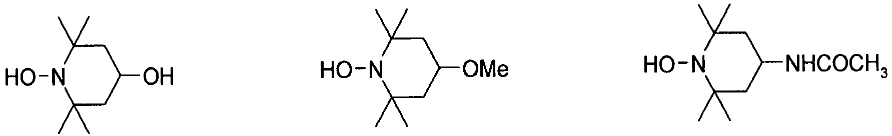 | |
| 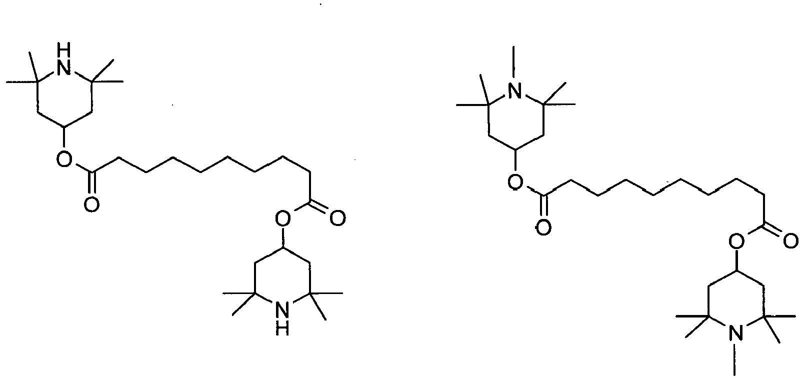 | |
| 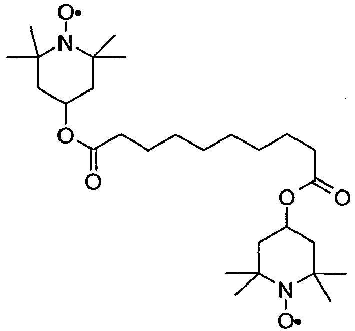 | |

The LC media preferably comprise 0 to 10% by weight, in particular 1 ppm to 5% by weight, particularly preferably 1 ppm to 1% by weight, of stabilisers. The LC media preferably comprise one or more stabilisers selected from the group consisting of compounds from Table C

### Working Examples:

The following examples are intended to explain the invention without restricting it.

Unless explicitly noted otherwise, all temperature values indicated in the present application, for example the melting point T(C,N), the transition from the smectic (S) phase to the nematic (N) phase T(S,N) and the clearing point T(N,I), are indicated in degrees Celsius (°C). M.p. denotes melting point, cl.p. = clearing point. Furthermore, C = crystalline state, N = nematic phase, S = smectic phase and I = isotropic phase. The figures between these symbols represent the transition temperatures.

The host mixture used for determination of the optical anisotropy Δn of the compounds of the formula I is the commercial mixture ZLI-4792 (Merck KGaA). The dielectric anisotropy Δε is determined using commercial mixture ZLI-2857. The physical data of the compound to be investigated are obtained from the change in the dielectric constants of the host mixture after addition of the compound to be investigated and extrapolation to 100% of the compound employed. In general, 10% of the compound to be investigated are dissolved in the host mixture, depending on the solubility.

Unless indicated otherwise, parts or per cent data denote parts by weight or per cent by weight.

Above and below,
- V₀: denotes threshold voltage, capacitive [V] at 20°C
- nₑ: denotes extraordinary refractive index at 20°C and 589 nm,
- nₒ: denotes ordinary refractive index at 20°C and 589 nm,
- Δn: denotes optical anisotropy at 20°C and 589 nm
- ε_{⊥}: denotes dielectric susceptability perpendicular to the director at 20°C and 1 kHz,
- ε_{∥}: denotes dielectric susceptability parallel to the director at 20°C and 1 kHz,
- Δε: denotes dielectric anisotropy at 20°C and 1 kHz
- cl.p., T(N,I): denotes clearing point [°C]
- γ₁: denotes he rotational viscosity measured at 20°C [mPa·s], determined by the rotation method in a magnetic field
- K₁: denotes elastic constant, "splay" deformation at 20°C [pN]
- K₃: denotes elastic constant, "bend" deformation at 20°C [pN]
- LTS: denotes low-temperature stability (nematic phase), determined in test cells,
- HR₂₀: denotes voltage holding ratio at 20°C [%] and
- HR₁₀₀: denotes voltage holding ratio at 100°C [%].

All concentrations in this application relate to the corresponding mixture or mixture component, unless explicitly indicated otherwise. All physical properties are determined as described in "Merck Liquid Crystals, Physical Properties of Liquid Crystals", status November 1997, Merck KGaA, Germany, and apply for a temperature of 20°C, unless explicitly indicated otherwise.

Unless explicitly noted otherwise, all concentrations and % values (with the exception of the values for HR, contrast and transmission) in the present application are indicated in per cent by weight and relate to the corresponding mixture as a whole comprising all solid or liquid-crystalline components, without solvent.

### Mixture Examples

### Example M1

| | | | |
|---|---|---|---|
| CC-3-V1 | 9.50% | Clearing point [°C]: | 77.9 |
| CCH-23 | 21.50% | Δn [589 nm, 20°C]: | 0.1071 |
| CCH-34 | 6.00% | Δε [1 kHz, 20°C]: | -3.8 |
| CCH-35 | 6.00% | | |
| CCY-3-1 | 3.00% | | |
| CCY-3-O2 | 5.00% | | |
| CPY-2-O2 | 10.00% | | |
| CPY-3-O2 | 10.00% | | |
| CY-3-O2 | 5.00% | | |
| PP-1-2V1 | 2.00% | | |
| PY-3-O2 | 12.00% | | |
| PPOY-3-O2 | 10.00% | | |

### Example M2

| | | | |
|---|---|---|---|
| CC-3-V1 | 9.00% | Clearing point [°C]: | 77.4 |
| CCH-23 | 24.50% | Δn [589 nm, 20°C]: | 0.0996 |
| CCH-34 | 7.50% | Δε [1 kHz, 20°C]: | -4.0 |
| CCH-35 | 5.00% | | |
| CCY-3-O2 | 10.00% | | |
| CPY-2-O2 | 8.00% | | |
| CPY-3-O2 | 10.50% | | |
| CY-3-O2 | 7.50% | | |
| PY-3-O2 | 9.00% | | |
| PPOY-3-O2 | 9.00% | | |

## Claims

1. Liquid-crystalline medium based on a mixture of polar compounds, **characterised in that** it comprises at least one compound of the formula I, 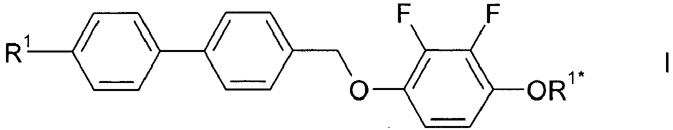 in which
R¹ and R^{1*} each, independently of one another, denote an alkyl or alkoxy radical having 1 to 15 C atoms, or cycloalkyl having 3 to 5 C atoms, where, in addition, one or more CH₂ groups in these radicals may each be replaced, independently of one another, by -C≡C-, -CF₂O-, -CH=CH-, 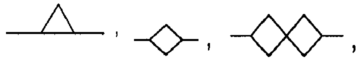 -O-, -CO-O-, -O-CO- in such a way that O atoms are not linked directly to one another, and in which, in addition, one or more H atoms may be replaced by halogen.

2. Liquid-crystalline medium according to claim 1, **characterised in that** it additionally comprises one or more compounds selected from the group of the compounds of the formulae IIA, IIB and IIC, 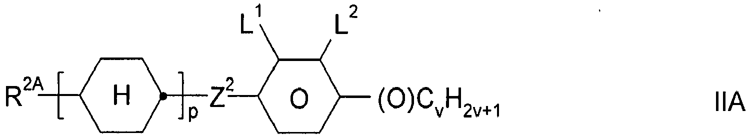 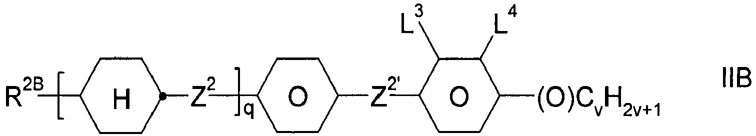 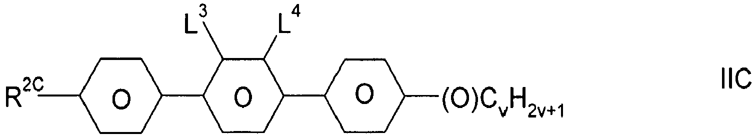 in which
R^{2A}, R^{2B} and R^{2C} each, independently of one another, denote H, an alkyl radical having up to 15 C atoms which is unsubstituted, monosubstituted by CN or CF₃ or at least monosubstituted by halogen, where, in addition, one or more CH₂ groups in these radicals may be replaced by -O-, -S-, 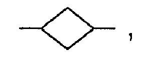
-C≡C-, -CF₂O-, -OCF₂-, -OC-O- or
-O-CO- in such a way that O atoms are not linked directly to one another,
L¹⁻⁴ each, independently of one another, denote F or Cl,
Z² and Z^{2'} each, independently of one another, denote a single bond, -CH₂CH₂-, -CH=CH-, -CF₂O-, -OCF₂-, -CH₂O-, -OCH₂-, , -CO-O-, -O-CO-, -C₂F₄-, -CF=CF-, -CH=CHCH₂O-,
p denotes 1 or 2,
q denotes 0 or 1, and
v denotes 1 to 6.

3. Liquid-crystalline medium according to one or more of claims 1 and 2, **characterised in that** the medium comprises one or more compounds of formula I-1 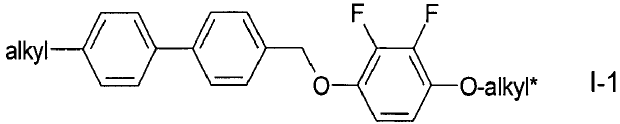 in which
alkyl and alkyl* each, independently of one another, denote a straight-chain alkyl radical having 1-6 C atoms.

4. Liquid Crystalline medium according to one or more of claims 1 to 3 **characterised in that** it comprises one or more compounds of the formula IIB-11 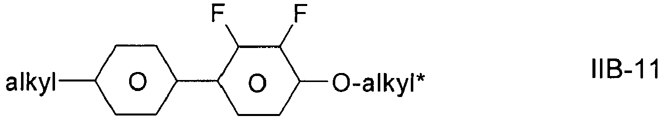 in which alkyl and alkyl* each, independently of one another, denote a straight-chain alkyl radical having 1-6 C atoms.

5. Liquid-crystalline medium according to one or more of claims 1 to 4, **characterised in that** it additionally comprises one or more polymerisable compounds.

6. Liquid-crystalline medium according to claim 5, **characterised in that** the concentration of the polymerisable compound(s), based on the medium, is 0.01 - 5% by weight.

7. Process for the preparation of a liquid-crystalline medium according to one or more of claims 1 to 6, **characterised in that** at least one compound of the formula I is mixed with at least one further mesogenic compound, and one or more polymerisable compounds are optionally added.

8. Use of the liquid-crystalline medium according to one or more of claims 1 to 6 in electro-optical displays.

9. Use of the liquid-crystalline medium according to one or more of claims 1 to 6 in VA, PVA and PS-VA, IPS, PS-IPS, FFS, PS-FFS or PALC displays.

10. Use of the liquid-crystalline medium according to claim 5 or 6 in PS and PSA displays for generating of a tilt angle in the liquid-crystalline medium by in-situ polymerisation of the polymerisable compound(s) in the PSA display with application of an electric or magnetic field.

11. Electro-optical display having active-matrix addressing, **characterised in that** it contains, as dielectric, a liquid-crystalline medium according to one or more of claims 1 to 6.

12. Electro-optical display according to claim 11, **characterised in that** it is a VA, PSA, PS-VA, PALC, FFS, PS-FFS or PS-IPS display.
